(19) Europäisches Patentamt
European Patent Office
Office européen des brevets

(11) **EP 4 455 754 B1**

(12) **EUROPEAN PATENT SPECIFICATION**

(45) Date of publication and mention of the grant of the patent:
**05.08.2026 Bulletin 2026/32**

(21) Application number: **24194988.2**

(22) Date of filing: **16.08.2024**

(51) International Patent Classification (IPC):
***G02B 13/00*** *(2006.01)* ***G02B 13/18*** *(2006.01)*
***G02B 13/04*** *(2006.01)* *G02B 9/62* *(2006.01)*

(52) Cooperative Patent Classification (CPC):
**G02B 13/0045; G02B 13/006; G02B 13/04; G02B 13/18;** G02B 9/62

(54) **OPTICAL SYSTEM, CAMERA MODULE, AND TERMINAL DEVICE**

OPTISCHES SYSTEM, KAMERAMODUL UND ENDGERÄTEVORRICHTUNG

SYSTÈME OPTIQUE, MODULE DE CAMÉRA ET DISPOSITIF TERMINAL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.09.2023 CN 202311146007**

(43) Date of publication of application:
**30.10.2024 Bulletin 2024/44**

(73) Proprietor: **Jiangxi OFILM Optical Co., Ltd.**
**Nanchang, Jiangxi 330096 (CN)**

(72) Inventors:
- **LAN, Binli**
  **Shenzhen, 518106 (CN)**
- **TU, Chen**
  **Nanchang, 330096 (CN)**
- **WEI, Yao**
  **Nanchang, 330096 (CN)**

(74) Representative: **Metida**
**Gyneju str. 16**
**01109 Vilnius (LT)**

(56) References cited:
**WO-A1-2021/221207**
**US-A1- 2021 026 109**
**US-B2- 9 753 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 455 754 B1

## Description

FIELD

The subject matter relates to field of optical imaging, and more particularly, to an optical system, a camera module, and a terminal device.

BACKGROUND

With the development of in-car industry, in order to provide drivers with better driving experience, camera modules are widely used in various in-car systems such as advanced driving assistance systems, driving record systems, and vehicle backup cameras, to achieve functions of autonomous driving and monitoring of the vehicles. However, with the trend of miniaturization of optical systems, how to achieve large aperture of the optical system to improve imaging quality is problematic. Conventional camera modules are known from D1 (WO 2021/221207A1), D2 (US 2021/026109A1), and D3 (US 9753249B2).

SUMMARY

The present application provides an optical system, a camera module, and a terminal device. The invention is set out in the appended set of claims.

In a first aspect, the present application provides an optical system. The optical system consists of six lenses having refractive power. From an object side to an image side along an optical axis of the optical system, the six lenses sequentially include a first lens, a second lens, a third lens, a fourth lens, a fifth lens, and a sixth lens. The first lens has negative refractive power, and an image side surface of the first lens is concave near the optical axis. The second lens has negative refractive power, an object side surface of the second lens is concave near the optical axis, and an image side surface of the second lens is convex near the optical axis. The third lens has positive refractive power, an object side surface of the third lens is convex near the optical axis, and an image side surface of the third lens is convex near the optical axis. The fourth lens has refractive power. The fifth lens has refractive power. The sixth lens has refractive power, and an object side a refractive of the sixth lens is convex near the optical axis. The optical system satisfies following relational expression: $1.2<IMGH/EPD<1.4$. Wherein, IMGH is half of an image height corresponding to a maximum field of view of the optical system, and EPD is an entrance pupil diameter of the optical system.

By setting the first lens of the optical system to have negative refractive power, incident rays at a large angle may be allowed to enter the optical system, thereby increasing a field of view of the optical system and thus obtaining the characteristics of a large field of view. The second lens has negative refractive power, which may allow the incident rays from the first lens to gently enter the optical system. The object side surface of the second lens is concave near the optical axis and the image side surface of the second lens is convex near the optical axis, which may correct off-axis aberrations, thereby reducing the sensitivity of the optical system to changes in resolution and enhancing the imaging stability of the optical system. Thus, the imaging quality of the optical system may be improved. When the rays enter the third lens with positive refractive power, since the object and image side surfaces of the third lens near the optical axis are convex, the rays collected by the first and second lenses may be compressed, thereby achieving gently transition of the incident rays to improve the relative illumination of the optical system. Also, the rays at the central and marginal fields may be converged, thereby correcting marginal field aberrations and improving the resolution ability of the optical system. Thus, the imaging quality of the optical system may further be improved. The object side surface of the sixth lens is convex near the optical axis, which may correct the astigmatism of the optical system, improve the imaging quality of the optical system, and facilitate the miniaturization design of the optical system.

In addition, the optical system satisfies the relational expression of $1.2<IMGH/EPD<1.4$. By limiting the image height and the entrance pupil diameter of the optical system, on the one hand, a large aperture of the optical system may be achieved, thereby ensuring that the optical system meets the sufficient image brightness in the marginal field and thus improving the imaging quality of the optical system. On the other hand, curvature of field may be avoided, which may improve the resolution of the optical system. When the upper limit of the above relational expression is exceeded, the entrance pupil diameter of the optical system is too small relative to the image height, which may not achieve large aperture and improve the image brightness. When it is below the lower limit of the above relational expression, the entrance pupil diameter of the optical system is too large relative to the image height, which may not reduce the astigmatism of the marginal field.

In a second aspect, the present application provides a camera module. The camera module includes an image sensor and the optical system mentioned in the first aspect. The image sensor is located on an image side of the optical system. The camera module including the optical system may have large aperture and high imaging quality while maintaining a lightweight and compact design.

In a third aspect, the present application provides a terminal device. The terminal device includes a fixing member and the camera module mentioned in the second aspect. The camera module is located on the fixing member. The terminal device including the camera module may have large aperture and high imaging quality while maintaining a lightweight and compact design.

## BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1 is a schematic diagram of an optical system according to a first embodiment of the present application;
FIG. 2 shows a longitudinal spherical aberration diagram, an astigmatism diagram, and a distortion diagram of the optical system of the first embodiment of the present application;
FIG. 3 is a schematic diagram of an optical system according to a second embodiment of the present application;
FIG. 4 shows a longitudinal spherical aberration diagram, an astigmatism diagram, and a distortion diagram of the optical system of the second embodiment of the present application;
FIG. 5 is a schematic diagram of an optical system according to a third embodiment of the present application;
FIG. 6 shows a longitudinal spherical aberration diagram, an astigmatism diagram, and a distortion diagram of the optical system of the third embodiment of the present application;
FIG. 7 is a schematic diagram of an optical system according to a fourth embodiment of the present application;
FIG. 8 shows a longitudinal spherical aberration diagram, an astigmatism diagram, and a distortion diagram of the optical system of the fourth embodiment of the present application;
FIG. 9 is a schematic diagram of an optical system according to a fifth embodiment of the present application;
FIG. 10 shows a longitudinal spherical aberration diagram, an astigmatism diagram, and a distortion diagram of the optical system of the fifth embodiment of the present application;
FIG. 11 is a schematic diagram of an optical system according to a sixth embodiment of the present application;
FIG. 12 shows a longitudinal spherical aberration diagram, an astigmatism diagram, and a distortion diagram of the optical system of the sixth embodiment of the present application;
FIG. 13 is a schematic diagram of a camera module according to the present application;
FIG. 14 is a schematic diagram of a terminal device according to the present application.

## DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application discloses an optical system. The optical system consists of six lenses with refractive power. The six lenses sequentially include a first lens, a second lens, a third lens, a fourth lens, a fifth lens, and a sixth lens from an object side to an image side along an optical axis. During imaging, rays enter the first lens from the object side of the first lens, then sequentially enter the second lens, the third lens, the fourth lens, the fifth lens, and the sixth lens, and finally form images on an imaging surface of the optical system.

Furthermore, the first lens has negative refractive power, the second lens has negative refractive power, the third lens has positive refractive power, the fourth lens has positive or negative refractive power, the fifth lens has positive or negative refractive power, and the sixth lens has positive or negative refractive power.

Furthermore, an object side surface of the first lens is convex or concave near the optical axis, and an image side surface of the first lens is concave near the optical axis. An object side surface of the second lens is concave near the optical axis, and an image side surface of the second lens is convex near the optical axis. An object side surface of the third lens is convex near the optical axis, and an image side surface of the third lens is convex near the optical axis. An object side surface of the fourth lens is concave or convex near the optical axis, and an image side surface of the fourth lens is concave or convex near the optical axis. An object side surface of the fifth lens is convex or concave near the optical axis, and an image side surface of the fifth lens is convex or concave near the optical axis. An object side surface of the sixth lens is convex near the optical axis, and an image side surface of the sixth lens is concave or convex near the optical axis.

By setting the first lens of the optical system to have negative refractive power, incident rays at a large angle may be allowed to enter the optical system, thereby increasing a field of view of the optical system and thus obtaining the characteristics of a large field of view. The second lens has negative refractive power, which may allow the incident rays from the first lens to gently enter the optical system. The object side surface of the second lens is concave near the optical axis and the image side surface of the second lens is convex near the optical axis, which may correct off-axis aberrations, thereby reducing the sensitivity of the optical system to changes in resolution and enhancing the imaging stability of the optical system. Thus, the imaging quality of the optical system may be improved. When the rays enter the third lens with positive refractive power, since the object and image side surfaces of the third lens near the optical axis are convex, the rays collected by the first and second lenses may be compressed, thereby achieving gently transition of the incident rays to improve the relative illumination of the optical system. Also, the rays at the central and marginal fields may be converged, thereby correcting marginal field aberrations and improving the resolution ability of the optical system. Thus, the imaging quality of the optical system may further be improved. The object side surface of the sixth lens is convex near the optical axis, which may correct the astigmatism of the optical system, improve the imaging quality of the optical system, and facilitate the miniaturization design of the optical system.

Furthermore, in some embodiments, the first lens and the third lenses are made of glass. At least two of the second lens, the fourth lens, the fifth lens, and the sixth lens are made of plastic. By including lenses of different materials, the optical system may have a low temperature drift sensitivity and small overall weight. In other embodiments, all of the first lens, the second lens, the third lens, the fourth lens, the fifth lens, and the sixth lens may be made of plastic, which may further reduce the weight and cost of the optical system. All of the lenses may also be made of glass, thereby allowing the optical system to have a better optical effect and a lower temperature drift sensitivity. The material of each lens of the optical system may be selected according to actual needs. For example, all of the lenses may be made of plastic or glass. The optical system may also include the lenses of different materials.

In some embodiments, spherical lenses may have simple manufacturing process, low production cost, facilitates flexible design of the surface shape of the lens, and improve the resolution ability of the optical system. Aspherical lenses may provide a more flexible design for the object side surface or image side surface of the lens, allowing the lens to solve problems such as unclear imaging, distorted field of view, or narrow field of view even when the lens has a small and thin size. Additionally, the optical systems may have good imaging quality without too many lenses, which may reduce the length of the optical system. Therefore, the first lens and the third lens may be spherical lenses, while the second lens, the fourth lens, the fifth lens, and the sixth lens are aspherical lenses. By including the spherical and aspherical lenses, the processability of each lens may be improved, which may be beneficial for surface design of each lens. Also, the object or image side surface of the lens may be designed more flexibly. Thus, problems such as unclear imaging, distorted field of view, or narrow field of view may be solved even when each lens has a small and thin size, and the optical system may have good imaging quality without too many lenses, which may reduce the length of the optical system. In other embodiments, the surfaces of each lens of the optical system may be all spherical, all aspherical, or any combination of spherical and aspherical surfaces, which may be selected according to actual needs.

In some embodiments, the optical system further includes an aperture stop, which may be an aperture stop and/or a field aperture stop. For example, the aperture stop may be an aperture stop. The aperture stop may also be a field aperture stop. The aperture stop may also be a combination of the aperture stop and the field aperture stop. By arranging the aperture stop between the image side surface of the second lens and the object side surface of the third lens, the exit pupil may be away from the imaging surface, and the effective diameter of the optical system may be reduced without reducing the telecentricity. Thus, miniaturization may be achieved. In other embodiments, the aperture stop may also be arranged between other two lenses.

In some embodiments, the optical system further includes an infrared filter. The infrared filter is arranged between the sixth lens and the imaging surface of the optical system. Optionally, the infrared filter may be an infrared cutoff filter, which filters out infrared rays and allows visible rays to pass through, thereby allowing the images to match the visual experience of human eye and then improving the imaging quality. In other embodiments, the infrared filter may also be an infrared bandpass filter, which allows the infrared rays to pass through and reflects the visible rays, thereby allowing the optical system to achieve infrared imaging and enabling the optical system to good imaging quality under dark environments or other special application scenarios. The infrared filter may be made of plastic. The infrared filter may also be made by coating on an optical glass. The infrared filter may also be made of other materials, which are selected according to actual needs.

In some embodiments, the optical system further includes a protective glass. The protective glass is arranged between the infrared filter and the imaging surface of the optical system, which may provide protection and dust prevention functions for the image sensor. The protective glass may be made of plastic. The protective glass may also be made by coating on an optical glass. The protective glass may also be made of other materials, which are selected according to actual needs.

In some embodiments, the optical system satisfies the relational expression: $1.2<IMGH/EPD<1.4$. For example, IMGH/EPD is equal to 1.21, 1.246, 1.282, 1.318, 1.354 or 1.39. Wherein, IMGH is half of an image height corresponding to a maximum field of view of the optical system, and EPD is an entrance pupil diameter of the optical system.

By limiting the image height and the entrance pupil diameter of the optical system, on the one hand, a large aperture of the optical system may be achieved, so that the optical system meets the sufficient image brightness in the marginal field, thereby improving the imaging quality of the optical system. On the other hand, curvature of field may be avoided, which may improve the resolution of the optical system. When the upper limit of the above relational expression is exceeded, the entrance pupil diameter of the optical system may be too small relative to the image height, which may not achieve large aperture to improve the image brightness. When it is below the lower limit of the above relational expression, the entrance pupil diameter of the optical system may be too large relative to the image height, which may not reduce the astigmatism of the marginal field.

In some embodiments, the optical system satisfies the relational expression: $0.89<CT2/SD3<1.3$. For example, CT2/SD3 is equal to 0.9, 0.978, 1.056, 1.134, 1.212 or 1.29. Wherein, CT2 is the thickness of the second lens at the optical axis, and SD3 is half of a maximum effective aperture of the object side surface of the second lens.

By limiting the maximum effective aperture of the object side surface of the second lens and the thickness of the second lens at the optical axis, the Modulation Transfer Function (MTF) performance and yield of the optical system may be improved, while the risk of ghosting may be reduced. When the upper limit of the above relational expression is exceeded, the thickness of the second lens at the optical axis may be too large, which may not be conducive to the miniaturization of the optical system. When it is below the lower limit of the above relational expression, the maximum effective aperture of the object side surface of the second lens may be too large, which may result in a larger marginal area of the object side surface of the second lens, thereby generating more stray light and increasing the risk of ghosting. Furthermore, the sensitivity of the second lens may also be increased, which is not conducive to the manufacture of the second lens.

In some embodiments, the optical system satisfies the relational expression: $7<|SD2/SAGS2|<255$. For example, |SD2/SAGS2| is equal to 10, 58, 106, 154, 202, or 250. Wherein, SD2 is half of a maximum effective aperture of the object side surface of the first lens, and SAGS2 is a vector height at the maximum effective aperture of the object side surface of the first lens, that is, a distance from an intersection point of the object side surface of the first lens and the optical axis to the maximum effective aperture of the object side surface of the first lens along the optical axis.

By limiting the maximum effective aperture and the vector height of the object side surface of the first lens, on the one hand, a too large curvature of the object side surface of the first lens may be avoided, which may reduce the processing difficulty of the first lens. On the other hand, the aperture of the object side surface of the first lens object may be reasonably controlled, which may reduce the risk of ghosting and also be conducive to the miniaturization of the optical system.

In some embodiments, the optical system satisfies the relational expression: $3.8<TTL/F<4.8$. For example, TTL/F is equal to 3.81, 4.006, 4.202, 4.398, 4.594, or 4.79. Wherein, TTL is a distance from the object side surface of the first lens to the imaging surface along the optical axis, that is, a total optical length, and F is a focal length of the optical system.

By limiting the focal length and the total optical length of the optical system, the miniaturization of the optical system may be achieved, and the rays may be better focused on the imaging surface. When the upper limit of the above relational expression is exceeded, the total optical length of the optical system may be too long relative to the focal length of the optical system, so that the chief ray may enter the imaging surface with too large angle. Thus, the marginal ray of the optical system cannot be imaged on the imaging surface, thereby causing incomplete imaging information and reducing the imaging quality. Also, it is not conducive to the miniaturization of the optical system. When it is below the lower limit of the above relational expression, the total optical length of the optical system may be too short relative to the focal length, which may increase the sensitivity of the optical system and be not conducive to the convergence of the rays on the imaging surface.

In some embodiments, the aperture stop of the optical system is arranged between the second lens and the third lens, and the optical system satisfies the relational expression: $-1.5<F12/F3456<-0.9$. For example, F12/F3456 is equal to -0.91, -1.026, -1.142, -1.258, -1.374, or -1.49. Wherein, F12 is a combined focal length of the first lens and the second lens, and F3456 is a combined focal length of the third lens, the fourth lens, the fifth lens, and the sixth lens.

Since the aperture stop is between the second lens and the third lens, the combined focal length of the lens group in front of and behind the aperture stop may be reasonably limited, which allows the lens group in front of the aperture stop (that is, the first lens and the second lens) to provide negative refractive power for the optical system. Thus, transmission and incidence of the rays into the aperture stop may be achieved with large angle, thereby achieving wide-angle of the optical system and improving the image brightness within a large field of view. The lens group behind the aperture stop (that is, the third lens, the fourth lens, the fifth lens, and the sixth lens) provides positive refractive power for the optical system. On the one hand, the height of the incident rays exited from the optical system may be controlled to reduce the higher-order-aberrations of the optical system and the outer diameter of the lenses. On the other hand, the field curvature generated by the lens group in front of the aperture stop may be corrected to reduce the effect of such the field curvature on the resolution.

In some embodiments, the optical system satisfies the relational expression: $8.9<TTL/CT6<19.5$. For example, TTL/CT6 is equal to 8.91, 11.008, 13.106, 15.204, 17.302, or 19.4. Wherein, TTL is a distance from the object side surface of the first lens to the imaging surface along the optical axis, and CT6 is a thickness of the sixth lens at the optical axis.

By limiting the ratio of the total optical length of the optical system to the thickness of the sixth lens at the optical axis, the structure of the optical system may be more compact, and the length of the optical system may be more reasonable. Also, it is also conducive to the formation and assembly of the optical system, and the eccentricity sensitivity may be reduced. When the upper limit of the above relational expression is exceeded, the total optical length of the optical system may be too long, which may not be conducive to the miniaturization of the optical system. When it is below the lower limit of the above relational expression, the thickness of the sixth lens at the optical axis may be too large, which may not be conducive to the formation and assembly of the sixth lens.

In some embodiments, the optical system satisfies the relational expression: $6<TTL/CT12<12$. For example, $TTL/CT12=6.1$, 7.7, 8.6, 9.5, 10.12, 11.05, or 11.98. Wherein, TTL is the distance from the object side surface of the first lens to the imaging surface along the optical axis, and CT12 is a distance from the image side surface of the first lens to the object side surface of the second lens along the optical axis.

By limiting the air spacing between the first and second lenses along the optical axis and the total optical length of the optical system, the total optical length of the optical system may be reduced, and miniaturization of the optical system may be achieved.

In accordance with the claimed invention, the optical system satisfies the relational expression: $3<TTL/(CT34+CT56)<20$.

For example, $TTL/(CT34+CT56)$ is equal to 3.1, 6.46, 9.82, 13.18, 16.54, or 19.9. Wherein, TTL is the distance from the object side surface of the first lens to the imaging surface along the optical axis, CT34 is a distance from the image side surface of the third lens to the object side surface of the fourth lens along the optical axis, and CT56 is a distance from the image side surface of the fifth lens to the object side surface of the sixth lens along the optical axis.

By limiting the air spacing between the third and fourth lenses and between the fifth and sixth lenses along the optical axis, and by limiting the total optical length of the optical system, the total optical length of the optical system may be reduced, and miniaturization of the optical system may be achieved. Furthermore, reasonable transition of the rays may be achieved among the third, fourth, fifth, and sixth lenses, thereby improving the relative illuminance of the optical system.

In some embodiments, the optical system satisfies the relational expression: $-1.83<F12/F<-1.25$. For example, $F12/F=-1.255$, -1.369, -1.483, -1.597, -1.711, or -1.825. Wherein, F is the focal length of the optical system, and F12 is the combined focal length of the first lens and the second lens.

By limiting the ratio between the combined focal length of the first and second lenses and the focal length of the optical system, the ability of the lens group in front of the aperture stop (that is, the first and second lenses of the optical system) for converging rays may be controlled, thereby allowing the rays within a large field of view to enter the optical system and ensuring the wide-angle characteristic of the optical system. When it is below the lower limit of the above relational expression, the refractive power of the first and second lenses may be insufficient, so that the rays within a large field of view may not enter the optical system, which may not increase the field of view of the optical system. When the upper limit of the above relational expression is exceeded, the refractive power of the first and second lenses is too large. Thus, strong astigmatism and chromatic aberration may generate, so that the optical system may not achieve high-resolution imaging and high resolution.

In some embodiments, the optical system satisfies the relational expression: $1<|F45/F|<7$. For example, $|F45/F|$ is equal to 1.1, 2.26, 3.42, 4.58, 5.74, or 6.9. Wherein, F is the focal length of the optical system, and F45 is a combined focal length of the fourth lens and the fifth lens.

By limiting the ratio between the combined focal length of the fourth and fifth lenses and the focal length of the optical system, the aberration caused by the rays passing through the lenses in front of the fourth lens may be corrected, thereby improve the resolution of the optical system. Also, the angle of the rays exited from the optical system may be reduced, so that the rays may enter the image sensor located on the image side of the camera module at a small angle, thereby improving the photosensitive performance of the image sensor and improving the imaging quality of the camera module.

Furthermore, the fourth lens and the fifth lens are cemented. One of the fourth lens and the fifth lens has positive refractive power, and another of the fourth lens and the fifth lens has negative refractive power, which may be conducive to the mutual correction of the aberrations of the optical system.

In some embodiments, the optical system satisfies the relational expression: $3<|R1/R2|<42$. For example, $|R1/R2|$ is equal to 3.1, 10.68, 18.26, 25.84, 33.42, or 41. Wherein, R1 is a radius of curvature of the object side surface of the first lens at the optical axis, and R2 is a radius of curvature of the image side surface of the first lens at the optical axis.

By limiting the ratio of the radius of curvature of the object side surface and the radius of curvature of the image side surface of the first lens at the optical axis, the surface shape of the first lens may not be too flat, so that the first lens may effectively converge the rays and improve the imaging quality of the optical system. Also, the first lens may also effectively correct the aberrations. In addition, while ensuring that the first lens meets the requirements of optical performance, it is also beneficial to prevent the surface shape of the first lens from being too curved, thereby reducing the processing difficulty of the first lens and the eccentricity sensitivity and tolerance sensitivity of the optical system. Thus, the imaging stability of optical system may be improved.

In some embodiments, the optical system satisfies the relational expression: $1<R4/R3<2$. For example, $R4/R3=1.1$, 1.26, 1.42, 1.58, 1.74, or 1.9. Wherein, R3 is a radius of curvature of the object side surface of the second lens at the optical axis, and R4 is a radius of curvature of the image side surface of the second lens at the optical axis.

By limiting the ratio of the radius of curvature of the object side surface and the radius of curvature of the image side surface of the second lens at the optical axis, the surface shape of the second lens may not be too curved, thereby reducing the sensitivity of the second lens during the manufacturing process. Also, it is beneficial to prevent the surface shape of the second lens from being too flat, so that the second lens may balance the high-order coma of the optical system, thereby improving the imaging quality of the optical system.

In some embodiments, the optical system satisfies the relational expression: $-12<R6/R5<-1$. For example, R6/R5 is equal to -1.1, -3.18, -5.26, -7.34, -9.42, or -11.5. Wherein, R5 is a radius of curvature of the object side surface of the third lens at the optical axis, and R6 is a radius of curvature of the image side surface of the third lens at the optical axis.

By limiting the ratio of the radius of curvature of the object side and the radius of curvature of the image side surface of the third lens at the optical axis, the curve degree of the third lens may be controlled, so that surface shape of the third lens may be flat and uniform, thereby reducing the assembly sensitivity of the optical system. Also, the overall imaging quality from the center to the margin of the imaging surface is clear and uniform, which may reduce the risk of ghosting, improve the resolution ability of the optical system, and thus improve the imaging quality of the optical system.

In some embodiments, the optical system satisfies the relational expression: $1<|R7/R8|<150$. For example, |R7/R8| is equal to 1.1, 30.68, 60.26, 89.84, 119.4, or 149. Wherein, R7 is a radius of curvature of the object side surface of the fourth lens at the optical axis, and R8 is a radius of curvature of the image side surface of the fourth lens at the optical axis.

By limiting the ratio of the radius of curvature of the object side surface and the radius of curvature of the image side surface of the fourth lens at the optical axis, the curve degree of the object side surface and image side surface of the fourth lens may be controlled, and the thick-to-thin ratio of the fourth lens may also be controlled to limit the change of shape of the fourth lens. Thus, the contribution of the spherical aberration of the fourth lens may be within a reasonable range, thereby improving the aberration of the optical system and enhancing the imaging quality of the optical system. Also, the surface complexity of the fourth lens may be reduced, thereby improve the processability of the fourth lens and ensuring the imaging quality of the optical system.

In some embodiments, the optical system satisfies the relational expression: $-1.5<R9/R10<-0.2$. For example, R9/R10=-0.21, -0.448, -0.686, -0.924, -1.162, or -1.4. Wherein, R9 is a radius of curvature of the object side surface of the fifth lens at the optical axis, and R10 is a radius of curvature of the image side surface of the fifth lens at the optical axis.

By limiting the ratio of the radius of curvature of the object side surface and the radius of curvature of the image side surface of the fifth lens at the optical axis, the shape of the fifth lens may be controlled. Thus, the risk of ghosting in the optical system may be reduced, and the resolution of the optical system may be improved, thereby improving the imaging quality of the optical system.

In some embodiments, the optical system satisfies the relational expression: $|R12/R11|<50$. For example, |R12/R11|=1, 10.6, 20.2, 29.8, 39.4, or 49. Wherein, R11 is a radius of curvature of the object side surface of the sixth lens at the optical axis, and R12 is a radius of curvature of the image side surface of the sixth lens at the optical axis.

By limiting the ratio of the radius of curvature of the object side surface and of the radius of curvature of the image side surface of the sixth lens at the optical axis, a desired optical deflection angle may be allocated to the sixth lens, thereby allowing the rays to gently travel in the optical system, improving the matching degree between the image sensor and the optical system head, and thus improving the imaging quality of the optical system.

In some embodiments, the optical system satisfies the relational expression: 80deg<FOV<90deg. For example, FOV is equal to 81, 82.6, 84.2, 85.8, 87.4 or 89 in deg. Wherein, FOV is a maximum field of view of the optical system. Furthermore, the optical system satisfies the relational expression: 85deg<FOV<90deg. By limiting the maximum field of view of the optical system, the optical system may have a large field of view, which allows the optical system to capture objects in more different scenes and enriching the imaging information of the optical system.

In some embodiments, the optical system satisfies the relational expression: $1.7<FNO<1.9$. For example, FNO is equal to 1.71, 1.75, 1.78, 1.82, 1.85, or 1.89. Wherein, FNO is an aperture number of the optical system. Furthermore, the optical system satisfies the relational expression: $1.8\leq FNO\leq 1.85$. By limiting the aperture number of the optical system, the optical system may have a large aperture, thereby allowing the optical system to have good diffraction limits, excellent relative illumination, and resolution.

The surface shape of each aspherical lens may be expressed by, but not limited to, the following aspherical formulas:

$$Z = \frac{cr^2}{1+\sqrt{1-(k+1)c^2r^2}} + \sum Air^i$$

Wherein, Z is a distance from a corresponding point of the aspherical surface to a plane tangent to the vertex, r is a distance from any point on the aspherical surface to the optical axis, c is a curvature of a vertex of the aspherical surface, c=1/Y, Y is a radius of curvature (i.e., the curvature c near the optical axis is the reciprocal of the Y radius in Table 1), k is cone constant, and Ai is a coefficient corresponding to the $i^{th}$ higher-order term in the above aspherical formula.

The following description will provide a detailed explanation of the optical system of the present application by specific parameters.

First embodiment

FIG. 1 is a schematic diagram of an optical system 100 according to a first embodiment of the present application. The optical system 100 includes a first lens L1, a second lens L2, an aperture stop STO, a third lens L3, a fourth lens L4, a fifth lens L5, and a sixth lens L6, which are sequentially arranged from the object side to the image side along the optical axis O. The materials of the first lens L1, the second lens L2, the third lens L3, the fourth lens L4, the fifth lens L5, and the sixth lens L6 are referred to the above embodiments and will not be repeated.

Furthermore, the first lens L1 has negative refractive power, the second lens L2 has negative refractive power, the third lens L3 has positive refractive power, the fourth lens L4 has negative refractive power, the fifth lens L5 has positive refractive power, and the sixth lens L6 has negative refractive power.

Furthermore, the object side surface S1 of the first lens L1 is convex near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is concave near the optical axis O, and the image side surface S8 of the fourth lens L4 is concave near the optical axis O. The object side S9 of the fifth lens L5 is convex near the optical axis O, and the image side surface S10 of the fifth lens L5 is convex near the optical axis O. The object side surface S11 of the sixth lens L6 is convex near the optical axis O, and the image side surface S12 of the sixth lens L6 is concave near the optical axis O.

For example, the focal length F of the optical system 100 is 6.8509mm, the aperture number FNO of the optical system 100 is 1.8, the maximum field of view FOV of the optical system 100 is 88deg, and the total optical length TTL of the optical system 100 is 27.005mm. Other parameters of the optical system 100 are shown in Table 1 below. The components arranged along the optical axis O of the optical system 100 from the object side to the image side are shown in the order from top to bottom in Table 1. For a same lens, the surface with a smaller surface numeral is the object side surface of the lens, and the surface with a larger surface is the image side surface of the lens. For example, the surface numerals 1 and 2 correspond to the object side surface S1 and image side surface S2 of the first lens, respectively. The Y radius in Table 1 refers to the radius of curvature of the object side surface or image side surface with the corresponding surface numeral at the optical axis O. In a "thickness" column of each lens, the first value is the thickness of the lens at the optical axis O, and the second value is the distance from the image side surface of the lens to the next surface at the optical axis O. In a "thickness" column of the aperture stop STO, the value is the distance from the aperture stop STO to the vertex of the next surface (the vertex refers to the intersection point of the surface and the optical axis O) at the optical axis O. The direction from the object side surface S1 of the first lens to the image side surface of the last lens is a positive direction of the optical axis O. When the value in the "thickness" column of the aperture stop STO is negative, the aperture stop STO is indicated to be located on the image side of the vertex of the next surface. When the value in the "thickness" column of the aperture stop STO is positive, the aperture stop STO is indicated to be located on the object side of the vertex of the next surface. The units of the Y radius, thickness, and focal length in Table 1 are mm. The refractive index and Abbe number in Table 1 are obtained at a reference wavelength of 587.56nm, while the reference wavelength of the focal length is 435.83nm.

The k in Table 2 is cone constant, and Table 2 provides the high-order coefficients A4, A6, A8, A10, A12, A14, A16, A18, and A20 that can be used for each aspherical surfaces of the first embodiment.

Table 1

| First embodiment | | | | | | | | |
|---|---|---|---|---|---|---|---|---|
| F=6.8509mm, FNO=1.8, FOV=88deg, TTL=27.005mm | | | | | | | | |
| Surface numeral | Surface name | Surface type | Y radius | thickness | Material | refractive index | Abbe number | Focal length |
| | object side | sphere | infinity | infinity | | | | |
| 1 | first lens | sphere | 26.427 | 0.922 | Glass | 1.517 | 64.2 | -14.403 |
| 2 | | sphere | 5.7549 | 2.372 | | | | |

(continued)

| First embodiment | | | | | | | | |
|---|---|---|---|---|---|---|---|---|
| F=6.8509mm, FNO=1.8, FOV=88deg, TTL=27.005mm | | | | | | | | |
| Surface numeral | Surface name | Surface type | Y radius | thickness | Material | refractive index | Abbe number | Focal length |
| 3 | second lens | asphere | -5.119 | 3.845 | plastic | 1.535 | 55.7 | -48.114 |
| 4 | | asphere | -8.058 | -0.198 | | | | |
| Aperture stop | aperture stop STO | sphere | infinity | 0.297 | | | | |
| 5 | third lens | sphere | 10.336 | 2.209 | glass | 1.618 | 63.4 | 9.682 |
| 6 | | sphere | -13.1630 | 4.282 | | | | |
| 7 | fourth lens | asphere | -17.430 | 0.580 | plastic | 1.646 | 23.5 | -7.095 |
| 8 | | asphere | 6.3019 | 0.000 | | | | |
| 9 | fifth lens | asphere | 6.3019 | 3.791 | plastic | 1.535 | 55.7 | 6.430 |
| 10 | | asphere | -6.0392 | 2.517 | | | | |
| 11 | sixth lens | asphere | 7.601 | 2.949 | plastic | 1.535 | 55.7 | -297.657 |
| 12 | | asphere | 6.2718 | 1.958 | | | | |
| 13 | infrared filter IR | sphere | infinity | 0.400 | glass | 1.517 | 64.2 | |
| 14 | | sphere | infinity | 0.582 | | | | |
| 15 | protective glass CG | sphere | infinity | 0.400 | glass | 1.517 | 64.2 | |
| 16 | | sphere | infinity | 0.099 | | | | |
| 17 | imaging surface IMG | sphere | infinity | 0.000 | | | | |

Table 2

| First embodiment | | | | |
|---|---|---|---|---|
| Aspherical coefficient | | | | |
| Surface numeral | 3 | 4 | 7 | 8 |
| k | 6.3756E-02 | -7.5022E-01 | 1.9437E+00 | -1.2068E+01 |
| A4 | 1.3718E-04 | 1.8795E-04 | -2.5954E-03 | -1.4788E-03 |
| A6 | 5.9844E-05 | -8.2988E-07 | 1.5815E-04 | -2.2185E-04 |
| A8 | -5.4762E-06 | 1.3843E-06 | -3.2753E-05 | 8.1882E-05 |
| A10 | 5.8150E-07 | -6.9017E-08 | 5.2065E-06 | -7.4938E-06 |
| A12 | 2.9460E-08 | 6.8324E-09 | -4.5209E-07 | 2.7294E-07 |
| A14 | -7.0266E-09 | -8.0049E-11 | 1.4488E-08 | -3.8043E-09 |
| A16 | 2.7618E-10 | -2.6090E-11 | 0.0000E+00 | 0.0000E+00 |
| A18 | 0.0000E+00 | 0.0000E+00 | 0.0000E+00 | 0.0000E+00 |
| A20 | 0.0000E+00 | 0.0000E+00 | 0.0000E+00 | 0.0000E+00 |
| Surface numeral | 9 | 10 | 11 | 12 |
| k | -1.2068E+01 | -6.6370E-02 | -1.2198E+01 | -1.5109E+00 |
| A4 | -1.4788E-03 | -1.3539E-03 | -4.2128E-04 | -4.2610E-03 |

(continued)

| Surface numeral | 9 | 10 | 11 | 12 |
|---|---|---|---|---|
| A6 | -2.2185E-04 | 1.2910E-04 | -6.8681E-05 | 1.5626E-04 |
| A8 | 8.1882E-05 | -9.5239E-06 | 1.0446E-05 | -3.0961E-06 |
| A10 | -7.4938E-06 | 4.9963E-07 | -7.1082E-07 | -1.0724E-07 |
| A12 | 2.7294E-07 | -1.9804E-08 | 2.8851E-08 | 8.9523E-09 |
| A14 | -3.8043E-09 | 4.3855E-10 | -6.1871E-10 | -1.7172E-10 |
| A16 | 0.0000E+00 | 0.0000E+00 | 5.2824E-12 | 4.3101E-13 |
| A18 | 0.0000E+00 | 0.0000E+00 | 0.0000E+00 | 0.0000E+00 |
| A20 | 0.0000E+00 | 0.0000E+00 | 0.0000E+00 | 0.0000E+00 |

Referring to (A) of FIG. 2, a longitudinal spherical aberration diagram of the optical system 100 of the first embodiment at wavelengths of 656.27nm, 587.56nm, 546.07nm, 486.13nm, and 435.83nm is shown. The horizontal coordinate along X-axis represents deviation of the focus point in mm, and the vertical coordinate along Y-axis represents the normalized field of view. From (A) of FIG. 2, the spherical aberration of the optical system 100 of the first embodiment is good, indicating that the imaging quality of the optical system 100 of this embodiment is good.

Referring to (B) of FIG. 2, an astigmatism diagram of the optical system 100 of the first embodiment at a wavelength of 435.83nm is shown. The horizontal coordinate along X-axis represents deviation of the focus point in mm, and the vertical coordinate along Y-axis represents the field of view in deg. T of the astigmatism diagram represents the curvature of the imaging surface IMG in the tangential direction, and S represents the curvature of the imaging surface IMG in the sagittal direction. From (B) of FIG. 2, the astigmatism of the optical system 100 has been corrected at the wavelength.

Referring to (C) of FIG. 2, a distortion diagram of the optical system 100 of the first embodiment at a wavelength of 435.83nm is shown. The horizontal coordinate along X-axis represents the distortion, and the vertical coordinate along Y-axis represents the field of view in deg. From (C) of FIG. 2, the distortion of the optical system 100 has been corrected at this wavelength.

Second embodiment

FIG. 3 is a schematic diagram of an optical system 100 according to a second embodiment of the present application. The optical system 100 includes a first lens L1, a second lens L2, a third lens L3, an aperture stop STO, a fourth lens L4, a fifth lens L5, and a sixth lens L6, which are sequentially arranged from the object side to the image side along the optical axis O. The materials of the lenses are referred to the above embodiments and will not be repeated.

Furthermore, the first lens L1 has negative refractive power, the second lens L2 has negative refractive power, the third lens L3 has positive refractive power, the fourth lens L4 has positive refractive power, the fifth lens L5 has negative refractive power, and the sixth lens L6 has positive refractive power.

Furthermore, the object side surface S1 of the first lens L1 is convex near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is convex near the optical axis O, and the image side surface S8 of the fourth lens L4 is concave near the optical axis O. The object side surface S9 of the fifth lens L5 is convex near the optical axis O, and the image side surface S10 of the fifth lens L5 is convex near the optical axis O; The object side S11 of the sixth lens L6 is convex near the optical axis O, and the image side surface S12 of the sixth lens L6 is convex near the optical axis O.

For example, the focal length F of the optical system 100 is 6.64mm, the aperture number FNO of the optical system 100 is 1.83, the maximum field of view FOV of optical system 100 is 88deg, and the total optical length TTL of the optical system 100 is 30.016mm. Other parameters in the second embodiment are shown in Tables 3 and 4 below, and the definitions of each parameter can be referred to the description of the previous embodiment, which will not be repeated.

Table 3

| Second embodiment | | | | | | | | |
|---|---|---|---|---|---|---|---|---|
| F=6.64mm, FNO=1.83, FOV=88deg, TTL=30.016mm | | | | | | | | |
| Surface numeral | Surface name | Surface type | Y radius | Thickness | Material | Refractive index | Abbe number | Focal length |
| | object side | sphere | infinity | infinity | | | | |
| 1 | first lens | sphere | 21.177 | 0.977 | glass | 1.517 | 64.2 | 11.38 |
| 2 | | sphere | 4.544 | 3.848 | | | | |
| 3 | second lens | asphere | -4.893 | 2.505 | plastic | 1.536 | 56.0 | -51.374 |
| 4 | | asphere | -7.010 | -0.213 | | | | |
| Aperture stop | Aperture stop STO | sphere | infinity | 0.407 | | | | |
| 5 | third lens | sphere | 17.200 | 5.578 | glass | 2.003 | 28.3 | 10.973 |
| 6 | | sphere | -26.200 | 1.041 | | | | |
| 7 | fourth lens | sphere | 1231.224 | 0.603 | glass | 1.923 | 18.9 | 7.765 |
| 8 | | sphere | 8.466 | 0.000 | | | | |
| 9 | fifth lens | sphere | 8.466 | 3.309 | glass | 1.729 | 54.7 | -9.126 |
| 10 | | sphere | -14.460 | 2.115 | | | | |
| 11 | sixth lens | asphere | 17.583 | 1.550 | plastic | 1.536 | 56.0 | 31.97 |
| 12 | | asphere | -819.392 | 2.468 | | | | |
| 13 | infrared filter IR | sphere | infinity | 0.400 | glass | 1.523 | 54.5 | |
| 14 | | sphere | infinity | 4.928 | | | | |
| 15 | protective glass CG | sphere | infinity | 0.400 | glass | 1.523 | 54.5 | |
| 16 | | sphere | infinity | 0.100 | | | | |
| 17 | imaging surface IMG | sphere | infinity | 0.000 | | | | |

Table 4

| Second embodiment | | | | |
|---|---|---|---|---|
| Spheric coefficient | | | | |
| Surface numeral | 3 | 4 | 11 | 12 |
| k | -1.1893E+00 | -1.1366E+00 | 1.0843E+01 | 0.0000E+00 |
| A4 | -6.2392E-04 | 1.7603E-05 | -8.1811E-05 | 4.7167E-04 |
| A6 | -8.3028E-05 | -5.9790E-05 | -2.1571E-05 | -2.7367E-05 |
| A8 | -9.4935E-06 | 1.3781E-05 | -8.0687E-07 | 5.4716E-07 |
| A10 | 1.0485E-05 | -1.1284E-06 | 1.2227E-07 | -8.8579E-08 |
| A12 | -1.9995E-06 | -5.9159E-08 | -2.3267E-08 | 4.8854E-10 |
| A14 | 8.7261E-08 | 7.4088E-09 | 9.5955E-10 | -5.7935E-11 |
| A16 | 9.6078E-09 | 2.2232E-09 | 7.5947E-11 | 4.9626E-11 |
| A18 | -5.4849E-10 | -3.4527E-10 | -7.5136E-12 | -3.8016E-12 |
| A20 | -2.3227E-11 | 1.3441E-11 | 1.6912E-13 | 8.2869E-14 |

Referring to (A) longitudinal spherical aberration diagram, (B) astigmatism diagram, and (C) distortion diagram of FIG. 4, the longitudinal spherical aberration, the astigmatism, and the distortion of the optical system 100 of the second embodiment have been controlled, thus the optical system 100 of this embodiment has good imaging quality. In addition, the wavelengths corresponding to the curves in (A), (B), and (C) of FIG. 4 are referred to wavelengths corresponding to the curves in (A), (B), and (C) of FIG. 2 of the first embodiment, which will not be repeated.

Third Embodiment

FIG. 5 is a schematic diagram of an optical system 100 according to a third embodiment of the present application. The optical system 100 includes a first lens L1, a second lens L2, a third lens L3, an aperture stop STO, a fourth lens L4, a fifth lens L5, and a sixth lens L6, which are sequentially arranged from the object side to the image side along the optical axis O. The materials of the lenses are referred to the above embodiments and will not be repeated.

Furthermore, the first lens L1 has negative refractive power, the second lens L2 has negative refractive power, the third lens L3 has positive refractive power, the fourth lens L4 has positive refractive power, the fifth lens L5 has negative refractive power, and the sixth lens L6 has positive refractive power.

Furthermore, the object side surface S1 of the first lens L1 is concave near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is convex near the optical axis O, and the image side surface S8 of the fourth lens L4 is convex near the optical axis O. The object side surface S9 of the fifth lens L5 is concave near the optical axis O, and the image side surface S10 of the fifth lens L5 is concave near the optical axis O. The object side surface S11 of the sixth lens L6 is convex near the optical axis O, and the image side surface S12 of the sixth lens L6 is convex near the optical axis O.

For example, the focal length F of the optical system 100 is 6.69mm, the aperture number FNO of the optical system 100 is 1.83, the maximum field of view FOV of the optical system 100 is 85.5deg, and the total optical length TTL of the optical system 100 is 30.003mm. Other parameters of the third embodiment are shown in Tables 5 and 6 below, and the definitions of each parameter can be referred to the description of the previous embodiment, which will not be repeated.

Table 5

| Third embodiment | | | | | | | | |
|---|---|---|---|---|---|---|---|---|
| F=6.69mm, FNO=1.83, FOV=85.5deg, TTL=30.003mm | | | | | | | | |
| Surface numeral | Surface name | Surface type | Y radius | Thickness | Material | Refractive index | Abbe number | Focal length |
| | object side | sphere | infinity | infinity | | | | |
| 1 | first lens | sphere | -218.628 | 0.961 | glass | 1.517 | 64.2 | -10.033 |
| 2 | | sphere | 5.339 | 4.653 | | | | |
| 3 | second lens | asphere | -5.014 | 2.053 | plastic | 1.646 | 23.5 | -50.003 |
| 4 | | asphere | -6.889 | 0.241 | | | | |
| Aperture stop | Aperture stop STO | sphere | infinity | -0.141 | | | | |
| 5 | third lens | sphere | 13.624 | 3.743 | glass | 2.003 | 28.3 | 12.527 |
| 6 | | sphere | -156.638 | 1.532 | | | | |
| 7 | fourth lens | sphere | 11.550 | 2.237 | glass | 1.593 | 68.3 | 9.006 |
| 8 | | sphere | -9.270 | 0.000 | | | | |
| 9 | fifth lens | sphere | -9.270 | 0.599 | glass | 1.847 | 23.8 | -6.525 |
| 10 | | sphere | 14.432 | 0.748 | | | | |
| 11 | sixth lens | asphere | 12.315 | 3.338 | plastic | 1.536 | 56.0 | 9.65 |
| 12 | | asphere | -8.144 | 5.736 | | | | |

(continued)

| Third embodiment | | | | | | | | |
|---|---|---|---|---|---|---|---|---|
| F=6.69mm, FNO=1.83, FOV=85.5deg, TTL=30.003mm | | | | | | | | |
| Surface numeral | Surface name | Surface type | Y radius | Thickness | Material | Refractive index | Abbe number | Focal length |
| 13 | infrared filter IR | sphere | infinity | 0.400 | glass | 1.523 | 54.5 | |
| 14 | | sphere | infinity | 3.403 | | | | |
| 15 | protective glass CG | sphere | infinity | 0.400 | glass | 1.523 | 54.5 | |
| 16 | | sphere | infinity | 0.100 | | | | |
| 17 | imaging surface IMG | sphere | infinity | 0.000 | | | | |

Table 6

| Third embodiment | | | | |
|---|---|---|---|---|
| Spheric coefficient | | | | |
| Surface numeral | 3 | 4 | 11 | 12 |
| k | -2.0756E+00 | -2.3341E+00 | -9.9658E-02 | -8.7939E-01 |
| A4 | -1.6054E-03 | -5.1640E-04 | -4.5940E-04 | 2.1781E-04 |
| A6 | 2.5957E-04 | -3.9874E-05 | 1.0247E-05 | -3.2225E-06 |
| A8 | -8.9737E-05 | 1.2980E-05 | -3.3655E-06 | -1.0326E-06 |
| A10 | 2.0528E-05 | -9.7927E-07 | 3.6547E-07 | 1.1189E-07 |
| A12 | -2.6501E-06 | -6.9163E-08 | -1.4478E-08 | -1.2431E-09 |
| A14 | 1.2352E-07 | 3.4200E-09 | -3.9378E-10 | -5.7780E-10 |
| A16 | 1.0247E-08 | 1.8534E-09 | 4.7471E-11 | 4.1237E-11 |
| A18 | -1.4775E-09 | -2.0158E-10 | -1.1116E-12 | -1.1014E-12 |
| A20 | 5.0162E-11 | 6.0207E-12 | 2.9830E-15 | 9.8091E-15 |

Referring to (A) longitudinal spherical aberration diagram, (B) astigmatism diagram, and (C) distortion diagram of FIG. 6, the longitudinal spherical aberration, the astigmatism, and the distortion of the optical system 100 of the third embodiment have been controlled, thus the optical system 100 of this embodiment has good imaging quality. In addition, the wavelengths corresponding to the curves in (A), (B), and (C) of FIG. 6 are referred to wavelengths corresponding to the curves in (A), (B), and (C) of FIG. 2 of the first embodiment, which will not be repeated.

Fourth embodiment

FIG. 7 is a schematic diagram of an optical system 100 according to a fourth embodiment of the present application. The optical system 100 includes a first lens L1, a second lens L2, a third lens L3, an aperture stop STO, a fourth lens L4, a fifth lens L5, and a sixth lens L6, which are sequentially arranged from the object side to the image side along the optical axis O. The materials of the lenses are referred to the above embodiments and will not be repeated.

Furthermore, the first lens L1 has negative refractive power, the second lens L2 has negative refractive power, the third lens L3 has positive refractive power, the fourth lens L4 has negative refractive power, the fifth lens L5 has positive refractive power, and the sixth lens L6 has negative refractive power.

Furthermore, the object side surface S1 of the first lens L1 is convex near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is concave near the optical axis O, and the image side surface S8 of the fourth lens L4 is concave near the optical axis O. The object side surface S9 of the fifth lens L5 is convex near the optical axis O, and the image side surface S10 of the fifth lens L5 is convex near the optical axis O. The object side surface S11 of the sixth lens L6 is convex near the optical axis O, while the image side surface S12 of the sixth lens L6 is concave near the optical axis O.

For example, the focal length F of the optical system 100 is 6.77mm, the aperture number FNO of the optical system 100 is 1.8, the maximum field of view FOV of the optical system 100 is 88.05deg, and the total optical length TTL of the optical system 100 is 26.868mm. Other parameters in the fourth embodiment are shown in Tables 7 and 8 below, and the definitions of each parameter can be referred to the description of the previous embodiment, which will not be repeated.

Table 7

| Fourth embodiment | | | | | | | | |
|---|---|---|---|---|---|---|---|---|
| F=6.77mm, FNO=1.8. FOV=88.05deg, TTL=26.868mm | | | | | | | | |
| Surface numeral | Surface name | Surface type | Y radius | Thickness | Material | Refractive index | Abbe number | Focal length |
| | object side | sphere | infinity | infinity | | | | |
| 1 | first lens | sphere | 38.718 | 1.092 | glass | 1.773 | 49.6 | -10.474 |
| 2 | | sphere | 6.636 | 2.995 | | | | |
| 3 | second lens | asphere | -4.834 | 3.178 | plastic | 1.535 | 55.7 | -203.235 |
| 4 | | asphere | -6.220 | -0.800 | | | | |
| Aperture stop | Aperture stop STO | sphere | infinity | 1.145 | | | | |
| 5 | third lens | sphere | 7.468 | 2.377 | glass | 1.717 | 47.9 | 8.818 |
| 6 | | sphere | -36.918 | 2.815 | | | | |
| 7 | fourth lens | asphere | -32.661 | 1.208 | plastic | 1.646 | 23.5 | -6.186 |
| 8 | | asphere | 4.620 | 0.000 | | | | |
| 9 | fifth lens | asphere | 4.620 | 5.413 | plastic | 1.535 | 55.7 | 5.646 |
| 10 | | asphere | -5.216 | 0.633 | | | | |
| 11 | sixth lens | asphere | 25.588 | 1.736 | plastic | 1.535 | 55.7 | -26.129 |
| 12 | | asphere | 8.850 | 2.840 | | | | |
| 13 | infrared filter IR | sphere | infinity | 0.400 | glass | 1.517 | 64.2 | |
| 14 | | sphere | infinity | 1.300 | | | | |
| 15 | protective glass CG | sphere | infinity | 0.400 | glass | 1.517 | 64.2 | |
| 16 | | sphere | infinity | 0.136 | | | | |
| 17 | imaging surface IMG | sphere | infinity | 0.000 | | | | |

Table 8

| Fourth embodiment | | | | |
|---|---|---|---|---|
| Spheric coefficient | | | | |
| Surface numeral | 3 | 4 | 7 | 8 |
| k | 1.3567E-01 | -4.7344E-01 | 0.0000E+00 | -6.1405E+00 |
| A4 | 2.5935E-04 | 4.3160E-05 | -1.5266E-03 | 3.0541E-03 |
| A6 | 3.4510E-05 | 6.9141E-06 | 7.3818E-05 | -1.6389E-05 |
| A8 | 1.7673E-06 | 1.0115E-06 | -4.8923E-06 | 2.8415E-05 |

(continued)

| Fourth embodiment | | | | |
|---|---|---|---|---|
| Spheric coefficient | | | | |
| Surface numeral | 3 | 4 | 7 | 8 |
| A10 | 6.7603E-08 | -1.1218E-07 | -1.1575E-06 | -5.0164E-06 |
| A12 | 8.5852E-09 | 6.6899E-09 | 1.1440E-07 | 1.7463E-07 |
| A14 | -1.6328E-09 | 1.5334E-11 | 1.5767E-09 | 1.1988E-08 |
| A16 | 9.8201E-11 | -9.1491E-12 | -3.8272E-10 | -6.9348E-10 |
| A18 | 0.0000E+00 | 0.0000E+00 | 0.0000E+00 | 0.0000E+00 |
| A20 | 0.0000E+00 | 0.0000E+00 | 0.0000E+00 | 0.0000E+00 |
| Surface numeral | 9 | 10 | 11 | 12 |
| k | -6.1405E+00 | 1.9493E-01 | -1.1413E+01 | 0.0000E+00 |
| A4 | 3.0541E-03 | -1.1443E-03 | -8.9064E-03 | -9.0262E-03 |
| A6 | -1.6389E-05 | 3.8660E-04 | 5.8953E-04 | 5.1461E-04 |
| A8 | 2.8415E-05 | -3.4550E-05 | -3.0348E-05 | -3.1388E-05 |
| A10 | -5.0164E-06 | 1.7430E-06 | -1.0727E-07 | 1.1090E-06 |
| A12 | 1.7463E-07 | -2.7915E-08 | 3.1399E-08 | -1.4245E-08 |
| A14 | 1.1988E-08 | -8.3855E-10 | 3.3448E-09 | -2.8958E-10 |
| A16 | -6.9348E-10 | 3.3192E-11 | -2.2533E-10 | 5.7380E-12 |
| A18 | 0.0000E+00 | 0.0000E+00 | 0.0000E+00 | 0.0000E+00 |
| A20 | 0.0000E+00 | 0.0000E+00 | 0.0000E+00 | 0.0000E+00 |

Referring to (A) longitudinal spherical aberration diagram, (B) astigmatism diagram, and (C) distortion diagram of FIG. 8, the longitudinal spherical aberration, the astigmatism, and the distortion of the optical system 100 of the fourth embodiment have been controlled, thus the optical system 100 of this embodiment has good imaging quality. In addition, the wavelengths corresponding to the curves in (A), (B), and (C) of FIG. 8 are referred to wavelengths corresponding to the curves in (A), (B), and (C) of FIG. 2 of the first embodiment, which will not be repeated.

Fifth embodiment

FIG. 9 is a schematic diagram of an optical system 100 according to a fifth embodiment of the present application. The optical system 100 includes a first lens L1, a second lens L2, a third lens L3, an aperture stop STO, a fourth lens L4, a fifth lens L5, and a sixth lens L6, which are sequentially arranged from the object side to the image side along the optical axis O. The materials of the lenses are referred to the above embodiments and will not be repeated.

Furthermore, the first lens L1 has negative refractive power, the second lens L2 has negative refractive power, the third lens L3 has positive refractive power, the fourth lens L4 has negative refractive power, the fifth lens L5 has positive refractive power, and the sixth lens L6 has negative refractive power.

Furthermore, the object side surface S1 of the first lens L1 is concave near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is concave near the optical axis O, and the image side surface S8 of the fourth lens L4 is concave near the optical axis O. The object side surface S9 of the fifth lens L5 is convex near the optical axis O, and the image side surface S10 of the fifth lens L5 is convex near the optical axis O. The object side surface S11 of the sixth lens L6 is convex near the optical axis O, and the image side surface S12 of the sixth lens L6 is concave near the optical axis O.

For example, the focal length F of the optical system 100 is 6.79mm, the aperture number FNO of the optical system 100 is 1.83, the maximum field of view FOV of the optical system 100 is 89deg, and the total optical length TTL of the optical system 100 is 26.9mm. Other parameters in the fifth embodiment are shown in Tables 9 and 10 below, and the definitions of each parameter can be referred to the description of the previous embodiment, which will not be repeated.

Table 9

| Fifth embodiment | | | | | | | | |
|---|---|---|---|---|---|---|---|---|
| F=6.79mm, FNO=1.83, FOV=89deg, TTL=26.9mm | | | | | | | | |
| Surface numeral | Surface name | Surface type | Y radius | Thickness | Material | Refractive index | Abbe number | Focal length |
| | object side | sphere | infinity | infinity | | | | |
| 1 | first lens | sphere | -57.217 | 1.060 | glass | 1.517 | 64.2 | -10.854 |
| 2 | | sphere | 6.284 | 2.914 | | | | |
| 3 | second lens | asphere | -5.150 | 2.800 | plastic | 1.535 | 55.7 | -446.866 |
| 4 | | asphere | -6.263 | 0.488 | | | | |
| Aperture stop | Aperture stop STO | sphere | infinity | -0.365 | | | | |
| 5 | third lens | sphere | 9.126 | 2.968 | glass | 1.623 | 57.0 | 8.826 |
| 6 | | sphere | -12.223 | 3.076 | | | | |
| 7 | fourth lens | asphere | -13.462 | 1.058 | plastic | 1.646 | 23.5 | -6.953 |
| 8 | | asphere | 6.951 | 0.000 | | | | |
| 9 | fifth lens | asphere | 6.951 | 4.745 | plastic | 1.535 | 55.7 | 6.87 |
| 10 | | asphere | -5.994 | 1.581 | | | | |
| 11 | sixth lens | asphere | 7.953 | 2.026 | plastic | 1.535 | 55.7 | -147.378 |
| 12 | | asphere | 6.584 | 0.800 | | | | |
| 13 | infrared filter IR | sphere | infinity | 0.400 | glass | 1.523 | 54.5 | |
| 14 | | sphere | infinity | 2.849 | | | | |
| 15 | protective glass CG | sphere | infinity | 0.400 | glass | 1.523 | 54.5 | |
| 16 | | sphere | infinity | 0.100 | | | | |
| 17 | imaging surface IMG | sphere | infinity | 0.000 | | | | |

Table 10

| Fifth embodiment | | | | |
|---|---|---|---|---|
| Spheric coefficient | | | | |
| Surface numeral | 3 | 4 | 7 | 8 |
| k | 2.1925E-01 | -2.6684E-01 | 2.2098E+00 | -1.0319E+01 |
| A4 | -2.8084E-04 | 1.3512E-06 | -1.4947E-03 | -1.6929E-04 |
| A6 | 2.4829E-05 | 1.9792E-05 | 9.6460E-05 | -1.6105E-04 |
| A8 | -7.7608E-07 | -7.8590E-07 | -2.6207E-05 | 7.3439E-05 |
| A10 | 2.9535E-07 | 6.5599E-08 | 5.0846E-06 | -7.5557E-06 |
| A12 | 3.4761E-08 | 1.0569E-08 | -5.1717E-07 | 3.0046E-07 |
| A14 | -4.7627E-09 | -1.2633E-09 | 1.9555E-08 | -6.0554E-09 |
| A16 | 1.3679E-10 | 4.5828E-11 | -5.2100E-11 | 1.0135E-10 |
| A18 | 0.0000E+00 | 0.0000E+00 | 0.0000E+00 | 0.0000E+00 |

(continued)

| Fifth embodiment | | | | |
|---|---|---|---|---|
| Spheric coefficient | | | | |
| Surface numeral | 3 | 4 | 7 | 8 |
| A20 | 0.0000E+00 | 0.0000E+00 | 0.0000E+00 | 0.0000E+00 |
| Surface numeral | 9 | 10 | 11 | 12 |
| k | -1.0319E+01 | -2.2578E-01 | -1.3695E+01 | -1.5031E+00 |
| A4 | -1.6929E-04 | -9.9984E-04 | -1.1069E-03 | -4.2004E-03 |
| A6 | -1.6105E-04 | 1.3928E-04 | -5.9599E-05 | 1.3076E-04 |
| A8 | 7.3439E-05 | -1.0321E-05 | 9.2635E-06 | -3.3997E-06 |
| A10 | -7.5557E-06 | 4.7797E-07 | -7.4110E-07 | -8.5758E-08 |
| A12 | 3.0046E-07 | -1.6544E-08 | 2.9157E-08 | 8.7273E-09 |
| A14 | -6.0554E-09 | 4.9919E-10 | -4.0704E-10 | -1.9194E-10 |
| A16 | 1.0135E-10 | -6.6182E-12 | -1.7739E-12 | 6.6506E-13 |
| A18 | 0.0000E+00 | 0.0000E+00 | 0.0000E+00 | 0.0000E+00 |
| A20 | 0.0000E+00 | 0.0000E+00 | 0.0000E+00 | 0.0000E+00 |

Referring to (A) of FIG. 10, a longitudinal spherical aberration diagram of the optical system 100 of the fifth embodiment at wavelengths of 656.27nm, 587.56nm, 546.07nm, 486.13nm, and 435.83nm is shown. The horizontal coordinate along X-axis represents deviation of the focus point in mm, and the vertical coordinate along Y-axis represents the normalized field of view. From (A) of FIG. 10, the spherical aberration of the optical system 100 of the fifth embodiment is good, indicating that the imaging quality of the optical system 100 of this embodiment is good.

Referring to (B) of FIG. 10, an astigmatism diagram of the optical system 100 of the fifth embodiment at a wavelength of 435.83nm is shown. The horizontal coordinate along X-axis represents deviation of the focus point in mm, and the vertical coordinate along Y-axis represents the image height in mm. T of the astigmatism diagram represents the curvature of the imaging surface IMG in the tangential direction, and S represents the curvature of the imaging surface IMG in the sagittal direction. From (B) of FIG. 10, the astigmatism of the optical system 100 has been corrected at the wavelength.

Referring to (C) of FIG. 10, a distortion diagram of the optical system 100 of the fifth embodiment at a wavelength of 435.83nm is shown. The horizontal coordinate along X-axis represents the distortion, and the vertical coordinate along Y-axis represents the field of view in deg. From (C) of FIG. 10, the distortion of the optical system 100 has been corrected at this wavelength.

Sixth embodiment

FIG. 11 is a schematic diagram of an optical system 100 according to a sixth embodiment of the present application. The optical system 100 includes a first lens L1, a second lens L2, a third lens L3, an aperture stop STO, a fourth lens L4, a fifth lens L5, and a sixth lens L6, which are sequentially arranged from the object side to the image side along the optical axis O. The materials of the lenses are referred to the above embodiments and will not be repeated.

Furthermore, the first lens L1 has negative refractive power, the second lens L2 has negative refractive power, the third lens L3 has positive refractive power, the fourth lens L4 has negative refractive power, the fifth lens L5 has positive refractive power, and the sixth lens L6 has positive refractive power.

Furthermore, the object side surface S1 of the first lens L1 is convex near the optical axis O, and the image side surface S2 of the first lens L1 is concave near the optical axis O. The object side surface S3 of the second lens L2 is concave near the optical axis O, and the image side surface S4 of the second lens L2 is convex near the optical axis O. The object side surface S5 of the third lens L3 is convex near the optical axis O, and the image side surface S6 of the third lens L3 is convex near the optical axis O. The object side surface S7 of the fourth lens L4 is convex near the optical axis O, and the image side surface S8 of the fourth lens L4 is concave near the optical axis O. The object side surface S9 of the fifth lens L5 is convex near the optical axis O, and the image side surface S10 of the fifth lens L5 is convex near the optical axis O. The object side surface S11 of the sixth lens L6 is convex near the optical axis O, and the image side surface S12 of the sixth lens L6 is convex near the optical axis O.

For example, the focal length F of the optical system 100 is 6.298mm, the aperture number FNO of the optical system 100 is 1.83, the maximum field of view FOV of the optical system 100 is 89.72deg, and the total optical length TTL of the optical system 100 is 30mm. Other parameters in the sixth embodiment are shown in Tables 11 and 12 below, and the definitions of each parameter can be referred to the description of the previous embodiment, which will not be repeated..

Table 11

| Fifth embodiment | | | | | | | | |
|---|---|---|---|---|---|---|---|---|
| F=6.298mm, FNO=1.83, FOV=89.72deg, TTL=30mm | | | | | | | | |
| Surface numeral | Surface name | Surface type | Y radius | Thickness | Material | Refractive index | Abbe number | Focal length |
| | object side | sphere | infinity | infinity | | | | |
| 1 | first lens | sphere | 22.580 | 2.323 | glass | 1.517 | 64.2 | 11.202 |
| 2 | | sphere | 4.459 | 4.045 | | | | |
| 3 | second lens | asphere | -4.592 | 2.593 | plastic | 1.536 | 56.0 | -57.562 |
| 4 | | asphere | -6.455 | 0.067 | | | | |
| Aperture stop | Aperture stop STO | sphere | infinity | 0.088 | | | | |
| 5 | third lens | sphere | 13.496 | 3.911 | glass | 2.003 | 28.3 | 11.002 |
| 6 | | sphere | -54.244 | 0.091 | | | | |
| 7 | fourth lens | sphere | 50.634 | 3.019 | glass | 1.923 | 18.9 | -8.37 |
| 8 | | sphere | 6.579 | 0.000 | | | | |
| 9 | fifth lens | sphere | 6.579 | 2.695 | glass | 1.729 | 54.7 | 7.095 |
| 10 | | sphere | -20.442 | 1.409 | | | | |
| 11 | sixth lens | asphere | 17.010 | 2.771 | plastic | 1.536 | 56.0 | 21.39 |
| 12 | | asphere | -33.697 | 0.095 | | | | |
| 13 | infrared filter IR | sphere | infinity | 0.400 | glass | 1.523 | 54.5 | |
| 14 | | sphere | infinity | 5.963 | | | | |
| 15 | protective glass CG | sphere | infinity | 0.400 | glass | 1.523 | 54.5 | |
| 16 | | sphere | infinity | 0.130 | | | | |
| 17 | imaging surface IMG | sphere | infinity | 0.000 | | | | |

Table 12

| Fifth embodiment | | | | |
|---|---|---|---|---|
| Spheric coefficient | | | | |
| Surface numeral | 3 | 4 | 11 | 12 |
| k | -1.6456E+00 | -1.4323E+00 | 4.0755E+00 | -2.2347E+01 |
| A4 | -1.8285E-03 | -3.9470E-04 | -5.7346E-05 | 4.5549E-04 |
| A6 | 2.7883E-04 | -1.5104E-05 | 7.4344E-06 | -6.5686E-06 |
| A8 | -1.3533E-04 | 5.0632E-06 | -4.7797E-06 | -1.6597E-06 |
| A10 | 2.8531E-05 | -4.9420E-08 | 4.5091E-07 | 9.4457E-08 |
| A12 | -1.9190E-06 | -1.3380E-07 | -2.1086E-08 | -1.0262E-09 |
| A14 | -6.3514E-09 | 1.4571E-09 | -3.1203E-10 | -5.7215E-10 |

(continued)

| Fifth embodiment | | | | |
|---|---|---|---|---|
| Spheric coefficient | | | | |
| Surface numeral | 3 | 4 | 11 | 12 |
| A16 | -6.3319E-08 | 3.9386E-09 | 7.6365E-11 | 4.6596E-11 |
| A18 | 1.5427E-08 | -4.6724E-10 | -2.9577E-12 | -1.3747E-12 |
| A20 | -9.4725E-10 | 1.6267E-11 | 3.7119E-14 | 1.3188E-14 |

Referring to (A) longitudinal spherical aberration diagram, (B) astigmatism diagram, and (C) distortion diagram of FIG. 12, the longitudinal spherical aberration, the astigmatism, and the distortion of the optical system 100 of the sixth embodiment have been controlled, thus the optical system 100 of this embodiment has good imaging quality. In addition, the wavelengths corresponding to the curves in (A), (B), and (C) of FIG. 12 are referred to wavelengths corresponding to the curves in (A), (B), and (C) of FIG. 10 of the fifth embodiment, which will not be repeated.

Table 13 summarizes the ratios of various relational expressions in the first to sixth embodiments of the present application.

Table 13

| Relational expression /embodiment | First embodiment | Second embodiment | Third embodiment | Fourth embodiment | Fifth embodiment | Sixth embodiment |
|---|---|---|---|---|---|---|
| 1.2<IMGH/EPD<1.4 | 1.252 | 1.317 | 1.341 | 1.255 | 1.285 | 1.381 |
| 0.89<CT2/SD3<1.3 | 1.187 | 0.922 | 0.625 | 1.013 | 0.896 | 1.295 |
| 7<\|SD2/SAGS2\|<255 | 12.085 | 9.125 | 8.630 | 17.692 | 253.19 | 8.124 |
| 3.8<TTL/F<4.8 | 3.9418 | 4.5205 | 4.4848 | 3.9687 | 3.9617 | 4.7634 |
| -1.5<F12/F3456<-0.9 | -1.430 | -1.116 | -0.941 | -1.311 | -1.376 | -1.211 |
| 8.9<TTL/CT6<19.5 | 9.157 | 19.365 | 8.988 | 15.477 | 13.277 | 10.826 |
| 6<TTL/CT12<12 | 11.385 | 7.80 | 6.448 | 8.971 | 9.231 | 7.417 |
| 3<TTL/(CT34+CT56) <20 | 3.972 | 9.511 | 13.159 | 7.792 | 5.776 | 20.000 |
| -1.83<F12/F<-1.25 | -1.784 | -1.468 | -1.274 | -1.744 | -1.828 | -1.590 |
| 1<\|F45/F\|<7 | 3.070 | 5.058 | -5.152 | 1.926 | 3.199 | 6.599 |
| 3<\|R1/R2\|<42 | 4.5921 | 4.6604 | -40.9492 | 5.8345 | -9.1052 | 5.0639 |
| 1<R4/R3<2 | 1.5741 | 1.4327 | 1.3740 | 1.2867 | 1.2161 | 1.4057 |
| -12<R6/R5<-1 | -1.2735 | -1.5233 | -11.4972 | -4.9435 | -1.3394 | -4.0193 |
| 1<\|R7/R8\|<150 | -2.7658 | 145.4316 | -1.2460 | -7.0695 | -1.9367 | 7.6963 |
| -1.5<R9/R10<-0.2 | -1.0435 | -0.5855 | -0.6423 | -0.8857 | -1.1597 | -0.3218 |
| \|R12/R11\|<50 | 0.8251 | -46.6014 | -0.6613 | 0.3459 | 0.8279 | -1.9810 |
| 80deg<FOV<90deg | 88deg | 88deg | 85.5deg | 88.05deg | 89deg | 89.72deg |
| 1.7<FNO<1.9 | 1.8 | 1.83 | 1.83 | 1.8 | 1.83 | 1.83 |

Referring to FIG. 13, in a second aspect, the present application further discloses a camera module 200. The camera module 200 includes an image sensor 201 and an optical system 100 mentioned in any one of the first to sixth embodiments. The image sensor 201 is located on the image side of the optical system 100. The optical system 100 receives the light signal of an object and project the light signal onto the image sensor 201. The image sensor 201 converts the light signal corresponding to the object into an image signal. The camera module 200 having the optical system 100 may have large aperture and high imaging quality while maintaining a lightweight and compact design.

Referring to FIG. 14, in a third aspect, the present application further discloses a terminal device 400. The terminal device 400 includes a fixing member and a camera module 200 mentioned in the second aspect. The fixing member may be a housing 401. The camera module 200 is located on the housing 401. The terminal device 400 may be, but is not limited to, a mobile phone, a tablet computer, a laptop, a smartwatch, a monitor, a driving record system, or a vehicle backup camera. The terminal device 400 having the camera module 200 may have all characteristics of the optical system 100, that is, the terminal device 400 may have large aperture and high imaging quality while maintaining a lightweight and compact design.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. An optical system (100), the optical system (100) consisting of six lenses having refractive power, from an object side to an image side along an optical axis (O) of the optical system (100), the sixth lenses sequentially comprising:

   a first lens (L1) having negative refractive power, and an image side surface (S2) of the first lens (L1) being concave near the optical axis (O);
   a second lens (L2) having negative refractive power, an object side surface (S3) of the second lens (L2) being concave near the optical axis (O), and an image side surface (S4) of the second lens (L2) being convex near the optical axis (O);
   a third lens (L3) having positive refractive power, an object side surface (S5) of the third lens (L3) being convex near the optical axis (O), and an image side surface (S6) of the third lens (L3) being convex near the optical axis (O);
   a fourth lens (L4) having refractive power;
   a fifth lens (L5) having refractive power; and
   a sixth lens (L6) having refractive power, and an object side surface (S11) of the sixth lens (L6) being convex near the optical axis (O);
   wherein the optical system (100) satisfies following relational expression:

   $$1.2 < IMGH/EPD < 1.4;$$

   wherein, IMGH is half of an image height corresponding to a maximum field of view of the optical system (100), and EPD is an entrance pupil diameter of the optical system (100);
   **characterized in that**, the optical system (100) further satisfies following relational expression:

   $$3 < TTL/(CT34+CT56) < 20;$$

   wherein, TTL is a distance from an object side surface (S1) of the first lens (L1) to an imaging surface along the optical axis (O), CT34 is a distance from the image side surface (S6) of the third lens (L3) to an object side surface (S7) of the fourth lens (L4) along the optical axis (O), and CT56 is a distance from an image side surface (S10) of the fifth lens (L5) to the object side surface (S11) of the sixth lens (L6) along the optical axis (O).

2. The optical system (100) according to claim 1, **characterized in that**, the optical system (100) further satisfies following relational expression:

   $$0.89 < CT2/SD3 < 1.3;$$

   wherein, CT2 is a thickness of the second lens (L2) at the optical axis (O), and SD3 is half of a maximum effective aperture of the object side surface (S3) of the second lens (L2).

3. The optical system (100) according to claim 1, **characterized in that**, the optical system (100) further satisfies following relational expression:

   $$7 < |SD2/SAGS2| < 255;$$

wherein, SD2 is half of a maximum effective aperture of an object side surface (S1) of the first lens (L1), and SAGS2 is a vector height at the maximum effective aperture of the object side surface (S1) of the first lens (L1).

**4.** The optical system (100) according to claim 1, **characterized in that**, the optical system (100) further satisfies following relational expression:

$$3.8<TTL/F<4.8;$$

wherein, F is a focal length of the optical system (100).

**5.** The optical system (100) according to claim 1, **characterized in that**, the optical system (100) further comprises an aperture stop (STO) located between the second lens (L2) and the third lens (L3), the optical system (100) further satisfies following relational expression:

$$-1.5<F12/F3456<-0.9;$$

wherein, F12 is a combined focal length of the first lens (L1) and the second lens (L2), and F3456 is a combined focal length of the third lens (L3), the fourth lens (L4), the fifth lens (L5), and the sixth lens (L6).

**6.** The optical system (100) according to claim 1, **characterized in that**, the optical system (100) further satisfies at least one of following relational expressions:

$$8.9<TTL/CT6<19.5,\ 6<TTL/CT12<12;$$

wherein, CT6 is a thickness of the sixth lens (L6) at the optical axis (O), CT12 is a distance from the object side surface (S1) of the first lens (L1) to the object side surface (S3) of the second lens (L2) along the optical axis (O).

**7.** The optical system (100) according to claim 1, **characterized in that**, the optical system (100) further satisfies at least one of following relational expressions:

$$-1.83<F12/F<-1.25,\ 1<|F45/F|<7;$$

wherein, F is a focal length of the optical system (100), F12 is a combined focal length of the first lens (L1) and the second lens (L2), and F45 is a combined focal length of the fourth lens (L4) and the fifth lens (L5).

**8.** The optical system (100) according to claim 1, **characterized in that**, the optical system (100) further satisfies at least one of following relational expressions:

$$-12<R6/R5<-1,\ 1<|R7/R8|<150;$$

wherein, R5 is a radius of curvature of the object side surface (S5) of the third lens (L3) at the optical axis (O), R6 is a radius of curvature of the image side surface (S6) of the third lens (L3) at the optical axis (O), R7 is a radius of curvature of an object side surface (S7) of the fourth lens (L4) at the optical axis (O), and R8 is a radius of curvature of an image side surface (S8) of the fourth lens (L4) at the optical axis (O).

**9.** A camera module (200), **characterized in that**, the camera module (200) comprises an image sensor (201) and an optical system (100) according to any one of claims 1 to 8, and the image sensor (201) is located on an image side of the optical system (100).

**10.** A terminal device (400), **characterized in that**, the terminal device (400) comprises a fixing member (401) and a camera module (300) according to claim 9, and the camera module (300) is located on the fixing member(401).

## Patentansprüche

1. Ein optisches System (100), wobei das optische System (100) aus sechs Linsen mit Brechkraft besteht, wobei die sechs Linsen von einer Objektseite zu einer Bildseite entlang einer optischen Achse (O) des optischen Systems (100) der Reihe nach Folgendes umfassen:

   eine erste Linse (L1) mit negativer Brechkraft, und wobei eine bildseitige Oberfläche (S2) der ersten Linse (L1) nahe der optischen Achse (O) konkav ist;
   eine zweite Linse (L2) mit negativer Brechkraft, wobei eine objektseitige Oberfläche (S3) der zweiten Linse (L2) nahe der optischen Achse (O) konkav ist und eine bildseitige Oberfläche (S4) der zweiten Linse (L2) nahe der optischen Achse (O) konvex ist;
   eine dritte Linse (L3) mit positiver Brechkraft, wobei eine objektseitige Oberfläche (S5) der dritten Linse (L3) nahe der optischen Achse (O) konvex ist und eine bildseitige Oberfläche (S6) der dritten Linse (L3) nahe der optischen Achse (O) konvex ist;
   eine vierte Linse (L4) mit Brechkraft;
   eine fünfte Linse (L5) mit Brechkraft; und
   eine sechste Linse (L6) mit Brechkraft, und wobei eine objektseitige Oberfläche (S11) der sechsten Linse (L6) nahe der optischen Achse (O) konvex ist;
   wobei das optische System (100) den folgenden relationalen Ausdruck erfüllt:

   $$1.2<IMGH/EPD<1.4;$$

   wobei IMGH die Hälfte einer Bildhöhe ist, die einem maximalen Sichtfeld des optischen Systems (100) entspricht, und EPD ein Eintrittspupillendurchmesser des optischen Systems (100) ist;

   **dadurch gekennzeichnet, dass** das optische System (100) ferner den folgenden relationalen Ausdruck erfüllt:

   $$3<TTL/(CT34+CT56)<20;$$

   wobei TTL eine Entfernung von einer objektseitigen Oberfläche (S1) der ersten Linse (L1) zu einer Bildfläche entlang der optischen Achse (O) ist, CT34 eine Entfernung von der bildseitigen Oberfläche (S6) der dritten Linse (L3) zu einer objektseitigen Oberfläche (S7) der vierten Linse (L4) entlang der optischen Achse (O) ist, und CT56 eine Entfernung von einer bildseitigen Oberfläche (S10) der fünften Linse (L5) zu der objektseitigen Oberfläche (S11) der sechsten Linse (L6) entlang der optischen Achse (O) ist.

2. Das optische System (100) nach Anspruch 1, **dadurch gekennzeichnet, dass** das optische System (100) ferner den folgenden relationalen Ausdruck erfüllt:

   $$0.89<CT2/SD3<1.3;$$

   wobei CT2 eine Dicke der zweiten Linse (L2) an der optischen Achse (O) ist und SD3 die Hälfte einer maximalen effektiven Apertur der objektseitigen Oberfläche (S3) der zweiten Linse (L2) ist.

3. Das optische System (100) nach Anspruch 1, **dadurch gekennzeichnet, dass** das optische System (100) ferner den folgenden relationalen Ausdruck erfüllt:

   $$7<|SD2/SAGS2|<255;$$

   wobei SD2 die Hälfte einer maximalen effektiven Apertur einer objektseitigen Oberfläche (S1) der ersten Linse (L1) ist und SAGS2 eine Vektorhöhe an der maximalen effektiven Apertur der objektseitigen Oberfläche (S1) der ersten Linse (L1) ist.

4. Das optische System (100) nach Anspruch 1, **dadurch gekennzeichnet, dass** das optische System (100) ferner den folgenden relationalen Ausdruck erfüllt:

   $$3.8<TTL/F<4.8;$$

wobei F eine Brennweite des optischen Systems (100) ist.

**5.** Das optische System (100) nach Anspruch 1, **dadurch gekennzeichnet, dass** das optische System (100) ferner eine Aperturblende (STO) umfasst, die sich zwischen der zweiten Linse (L2) und der dritten Linse (L3) befindet, wobei das optische System (100) ferner den folgenden relationalen Ausdruck erfüllt:

$$-1.5<F12/F3456<-0.9;$$

wobei F12 eine kombinierte Brennweite der ersten Linse (L1) und der zweiten Linse (L2) ist und F3456 eine kombinierte Brennweite der dritten Linse (L3), der vierten Linse (L4), der fünften Linse (L5) und der sechsten Linse (L6) ist.

**6.** Das optische System (100) nach Anspruch 1, **dadurch gekennzeichnet, dass** das optische System (100) ferner mindestens einen der folgenden relationalen Ausdrücke erfüllt:

$$8.9<TTL/CT6<19.5,\ 6<TTL/CT12<12;$$

wobei CT6 eine Dicke der sechsten Linse (L6) an der optischen Achse (O) ist, CT12 ein Abstand von der objektseitigen Oberfläche (S1) der ersten Linse (L1) zu der objektseitigen Oberfläche (S3) der zweiten Linse (L2) entlang der optischen Achse (O) ist.

**7.** Das optische System (100) nach Anspruch 1, **dadurch gekennzeichnet, dass** das optische System (100) ferner mindestens einen der folgenden relationalen Ausdrücke erfüllt:

$$-1.83<F12/F<-1.25,\ 1<|F45/F|<7;$$

wobei F eine Brennweite des optischen Systems (100) ist, F12 eine kombinierte Brennweite der ersten Linse (L1) und der zweiten Linse (L2) ist und F45 eine kombinierte Brennweite der vierten Linse (L4) und der fünften Linse (L5) ist.

**8.** Das optische System (100) nach Anspruch 1, **dadurch gekennzeichnet, dass** das optische System (100) ferner mindestens einen der folgenden relationalen Ausdrücke erfüllt:

$$-12<R6/R5<-1,\ 1<|R7/R8|<150;$$

wobei R5 ein Krümmungsradius der objektseitigen Oberfläche (S5) der dritten Linse (L3) an der optischen Achse (O) ist, R6 ein Krümmungsradius der bildseitigen Oberfläche (S6) der dritten Linse (L3) an der optischen Achse (O) ist, R7 ein Krümmungsradius einer objektseitigen Oberfläche (S7) der vierten Linse (L4) an der optischen Achse (O) ist und R8 ein Krümmungsradius einer bildseitigen Oberfläche (S8) der vierten Linse (L4) an der optischen Achse (O) ist.

**9.** Ein Kameramodul (200), **dadurch gekennzeichnet, dass** das Kameramodul (200) einen Bildsensor (201) und ein optisches System (100) nach einem der Ansprüche 1 bis 8 umfasst, und sich der Bildsensor (201) auf einer Bildseite des optischen Systems (100) befindet.

**10.** Eine Endgerätevorrichtung (400), **dadurch gekennzeichnet, dass** die Endgerätevorrichtung (400) ein Befestigungselement (401) und ein Kameramodul (300) nach Anspruch 9 umfasst, und sich das Kameramodul (300) auf dem Befestigungselement (401) befindet.

## Revendications

**1.** Un système optique (100), le système optique (100) étant constitué de six lentilles ayant une puissance de réfraction, d'un côté objet vers un côté image le long d'un axe optique (O) du système optique (100), les six lentilles comprenant séquentiellement:

une première lentille (L1) ayant une puissance de réfraction négative, et une surface côté image (S2) de la première lentille (L1) étant concave près de l'axe optique (O);
une deuxième lentille (L2) ayant une puissance de réfraction négative, une surface côté objet (S3) de la deuxième lentille (L2) étant concave près de l'axe optique (O), et une surface côté image (S4) de la deuxième lentille (L2) étant convexe près de l'axe optique (O);
une troisième lentille (L3) ayant une puissance de réfraction positive, une surface côté objet (S5) de la troisième lentille (L3) étant convexe près de l'axe optique (O), et une surface côté image (S6) de la troisième lentille (L3) étant convexe près de l'axe optique (O);
une quatrième lentille (L4) ayant une puissance de réfraction;
une cinquième lentille (L5) ayant une puissance de réfraction; et
une sixième lentille (L6) ayant une puissance de réfraction, et une surface côté objet (S11) de la sixième lentille (L6) étant convexe près de l'axe optique (O);
dans lequel le système optique (100) satisfait à l'expression relationnelle suivante:

$$1.2<IMGH/EPD<1.4;$$

dans lequel, IMGH est la moitié d'une hauteur d'image correspondant à un champ de vision maximal du système optique (100), et EPD est un diamètre de la pupille d'entrée du système optique (100);

**caractérisé en ce que** le système optique (100) satisfait en outre à l'expression relationnelle suivante:

$$3<TTL/(CT34+CT56)<20;$$

dans lequel, TTL est une distance depuis une surface côté objet (S1) de la première lentille (L1) jusqu'à une surface d'imagerie le long de l'axe optique (O), CT34 est une distance depuis la surface côté image (S6) de la troisième lentille (L3) jusqu'à une surface côté objet (S7) de la quatrième lentille (L4) le long de l'axe optique (O), et CT56 est une distance depuis une surface côté image (S10) de la cinquième lentille (L5) jusqu'à la surface côté objet (S11) de la sixième lentille (L6) le long de l'axe optique (O).

**2.** Le système optique (100) selon la revendication 1, **caractérisé en ce que** le système optique (100) satisfait en outre à l'expression relationnelle suivante:

$$0.89<CT2/SD3<1.3;$$

dans lequel, CT2 est une épaisseur de la deuxième lentille (L2) au niveau de l'axe optique (O), et SD3 est la moitié d'une ouverture effective maximale de la surface côté objet (S3) de la deuxième lentille (L2).

**3.** Le système optique (100) selon la revendication 1, **caractérisé en ce que** le système optique (100) satisfait en outre à l'expression relationnelle suivante:

$$7<|SD2/SAGS2|<255;$$

dans lequel, SD2 est la moitié d'une ouverture effective maximale d'une surface côté objet (S1) de la première lentille (L1), et SAGS2 est une hauteur de vecteur au niveau de l'ouverture effective maximale de la surface côté objet (S1) de la première lentille (L1).

**4.** Le système optique (100) selon la revendication 1, **caractérisé en ce que** le système optique (100) satisfait en outre à l'expression relationnelle suivante:

$$3.8<TTL/F<4.8;$$

dans lequel, F est une longueur focale du système optique (100).

**5.** Le système optique (100) selon la revendication 1, **caractérisé en ce que** le système optique (100) comprend en outre un diaphragme d'ouverture (STO) situé entre la deuxième lentille (L2) et la troisième lentille (L3), le système optique (100) satisfait en outre à l'expression relationnelle suivante:

$$-1{,}5<F12/F3456<-0{,}9;$$

dans lequel, F12 est une longueur focale combinée de la première lentille (L1) et de la deuxième lentille (L2), et F3456 est une longueur focale combinée de la troisième lentille (L3), de la quatrième lentille (L4), de la cinquième lentille (L5) et de la sixième lentille (L6).

**6.** Le système optique (100) selon la revendication 1, **caractérisé en ce que** le système optique (100) satisfait en outre à au moins l'une des expressions relationnelles suivantes:

$$8.9<TTL/CT6<19.5,\ 6<TTL/CT12<12;$$

dans lequel, CT6 est une épaisseur de la sixième lentille (L6) au niveau de l'axe optique (O), CT12 est une distance depuis la surface côté objet (S1) de la première lentille (L1) jusqu'à la surface côté objet (S3) de la deuxième lentille (L2) le long de l'axe optique (O).

**7.** Le système optique (100) selon la revendication 1, **caractérisé en ce que** le système optique (100) satisfait en outre à au moins l'une des expressions relationnelles suivantes:

$$-1.83<F12/F<-1.25,\ 1<|F45/F|<7;$$

dans lequel, F est une longueur focale du système optique (100), F12 est une longueur focale combinée de la première lentille (L1) et de la deuxième lentille (L2), et F45 est une longueur focale combinée de la quatrième lentille (L4) et de la cinquième lentille (L5).

**8.** Le système optique (100) selon la revendication 1, **caractérisé en ce que** le système optique (100) satisfait en outre à au moins l'une des expressions relationnelles suivantes:

$$-12<R6/R5<-1,\ 1<|R7/R8|<150;$$

dans lequel, R5 est un rayon de courbure de la surface côté objet (S5) de la troisième lentille (L3) au niveau de l'axe optique (O), R6 est un rayon de courbure de la surface côté image (S6) de la troisième lentille (L3) au niveau de l'axe optique (O), R7 est un rayon de courbure d'une surface côté objet (S7) de la quatrième lentille (L4) au niveau de l'axe optique (O), et R8 est un rayon de courbure d'une surface côté image (S8) de la quatrième lentille (L4) au niveau de l'axe optique (O).

**9.** Un module de caméra (200), **caractérisé en ce que** le module de caméra (200) comprend un capteur d'image (201) et un système optique (100) selon l'une quelconque des revendications 1 à 8, et le capteur d'image (201) est situé sur un côté image du système optique (100).

**10.** Un dispositif terminal (400), **caractérisé en ce que** le dispositif terminal (400) comprend un élément de fixation (401) et un module de caméra (300) selon la revendication 9, et le module de caméra (300) est situé sur l'élément de fixation (401).

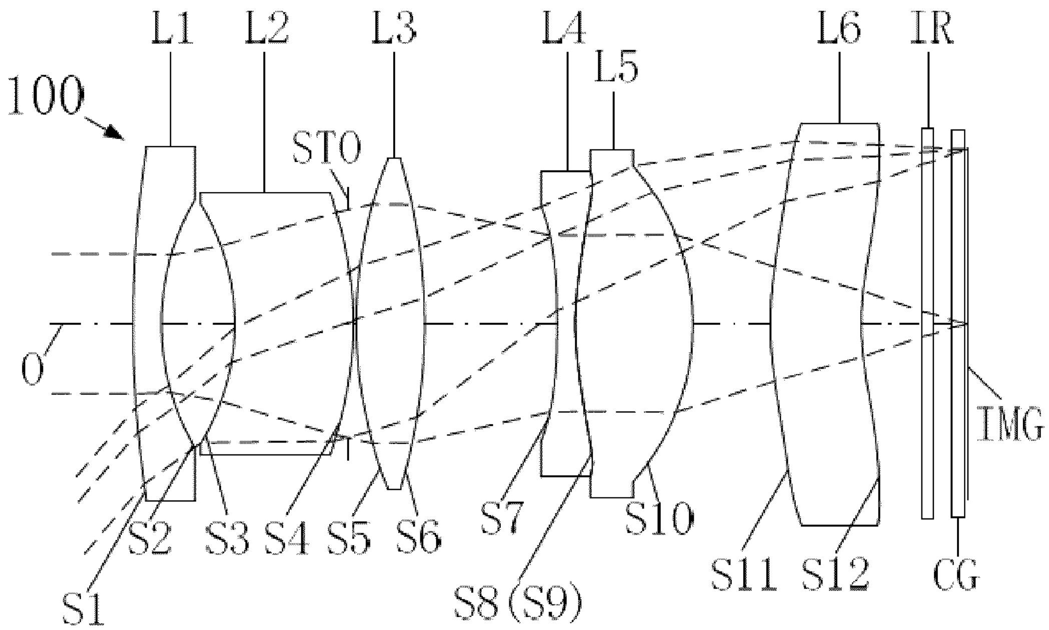
100
L1
L2
L3
L4
L5
L6
IR
STO
O
IMG
S1
S2
S3
S4
S5
S6
S7
S8 (S9)
S10
S11
S12
CG

FIG. 1

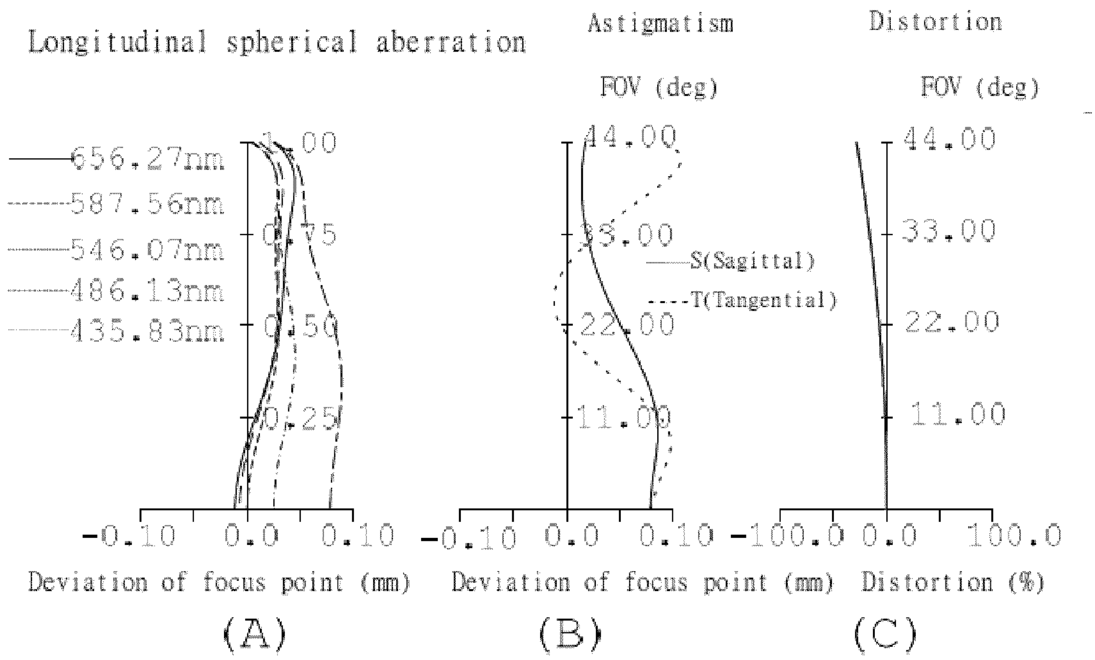
Longitudinal spherical aberration
656.27nm
587.56nm
546.07nm
486.13nm
435.83nm
1.00
0.75
0.50
0.25
-0.10
0.0
0.10
Deviation of focus point (mm)
(A)
Astigmatism
FOV (deg)
44.00
33.00
22.00
11.00
S(Sagittal)
T(Tangential)
-0.10
0.0
0.10
Deviation of focus point (mm)
(B)
Distortion
FOV (deg)
44.00
33.00
22.00
11.00
-100.0
0.0
100.0
Distortion (%)
(C)

FIG. 2

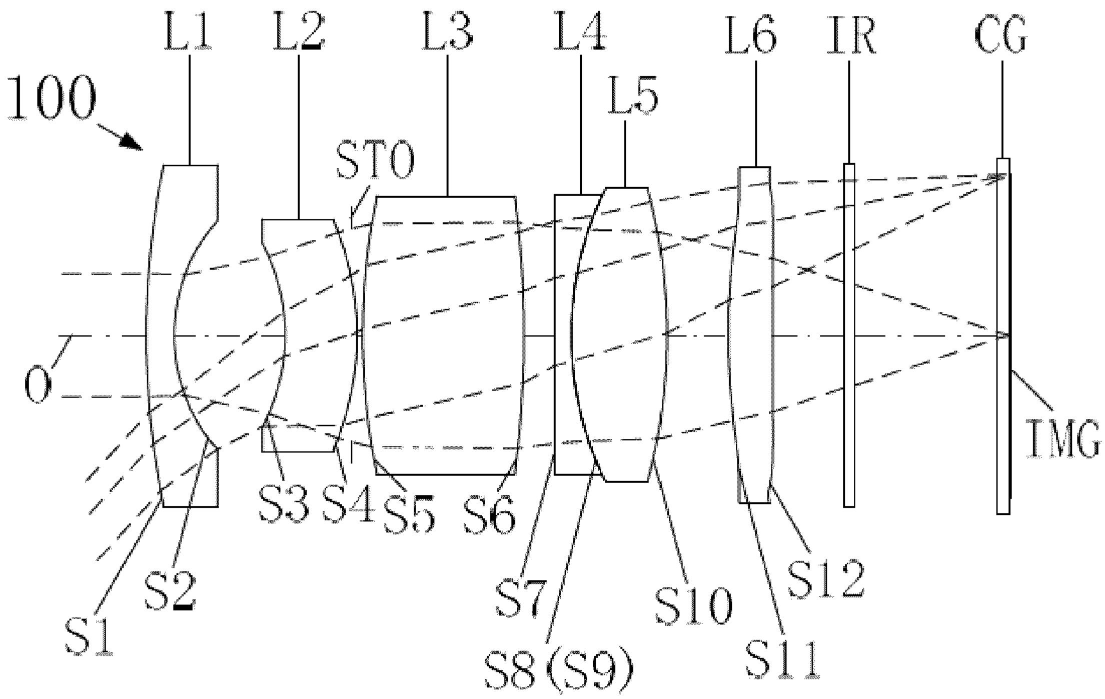
100
L1
L2
L3
L4
L5
L6
IR
CG
STO
O
IMG
S1
S2
S3
S4
S5
S6
S7
S8 (S9)
S10
S11
S12

FIG. 3

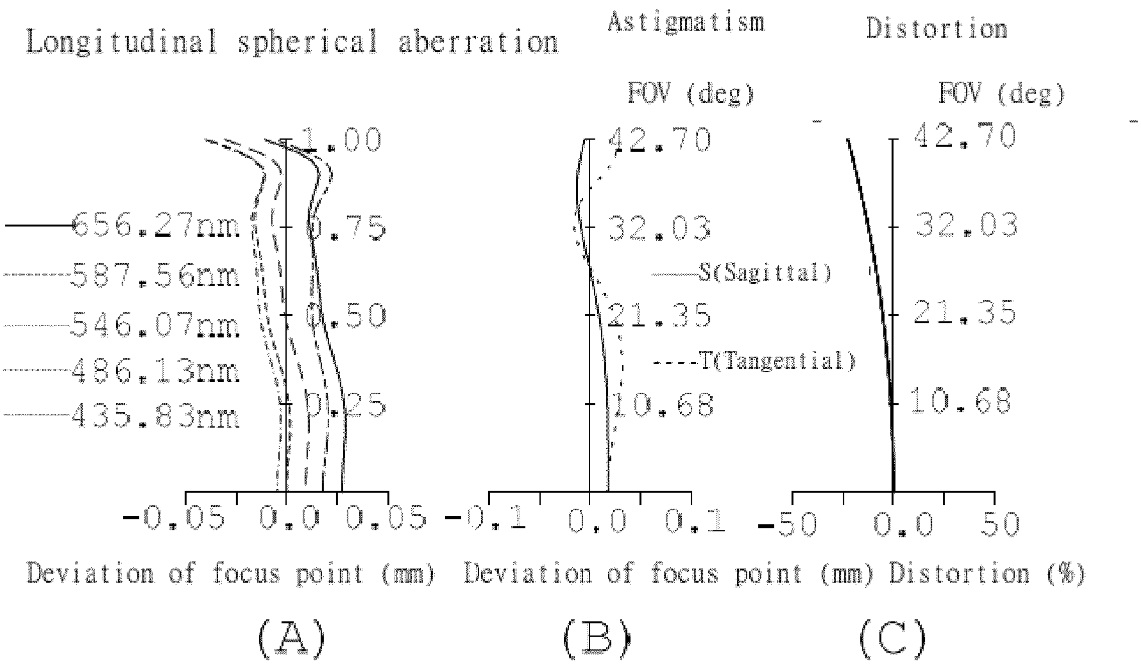
Longitudinal spherical aberration
Astigmatism
Distortion
FOV (deg)
FOV (deg)
1.00
0.75
0.50
0.25
656.27nm
587.56nm
546.07nm
486.13nm
435.83nm
42.70
32.03
21.35
10.68
S(Sagittal)
T(Tangential)
-0.05
0.0
0.05
-0.1
0.0
0.1
-50
0.0
50
Deviation of focus point (mm)
Deviation of focus point (mm)
Distortion (%)
(A)
(B)
(C)

FIG. 4

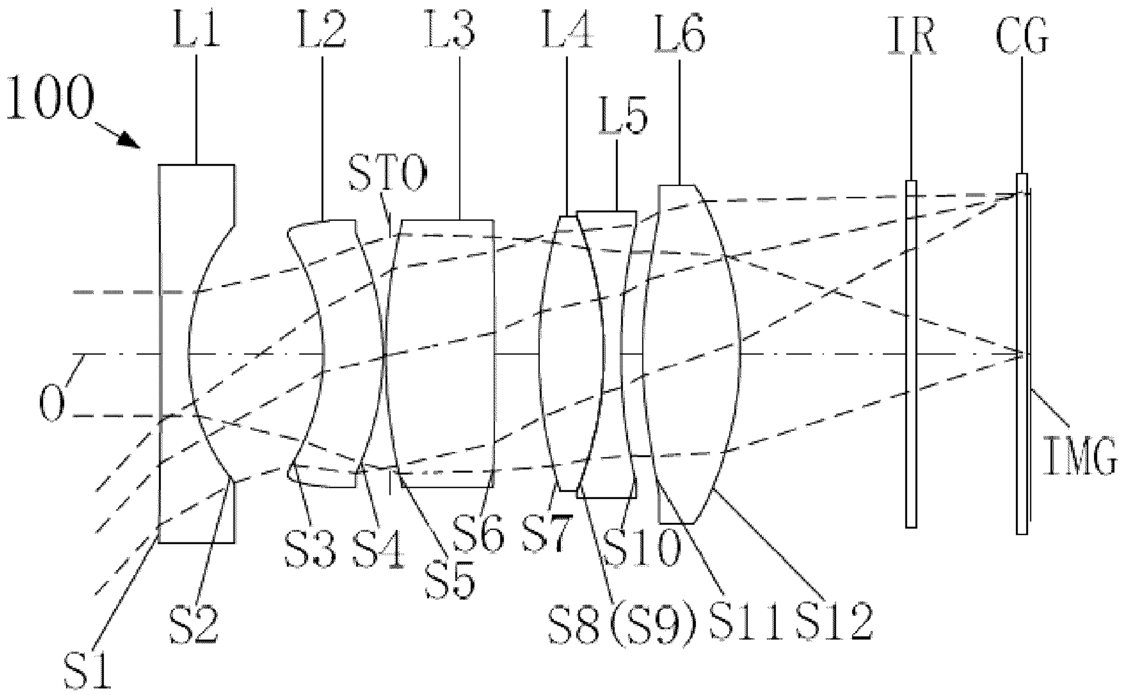
100
L1
L2
L3
L4
L5
L6
IR
CG
STO
O
IMG
S1
S2
S3
S4
S5
S6
S7
S8(S9)
S10
S11
S12

FIG. 5

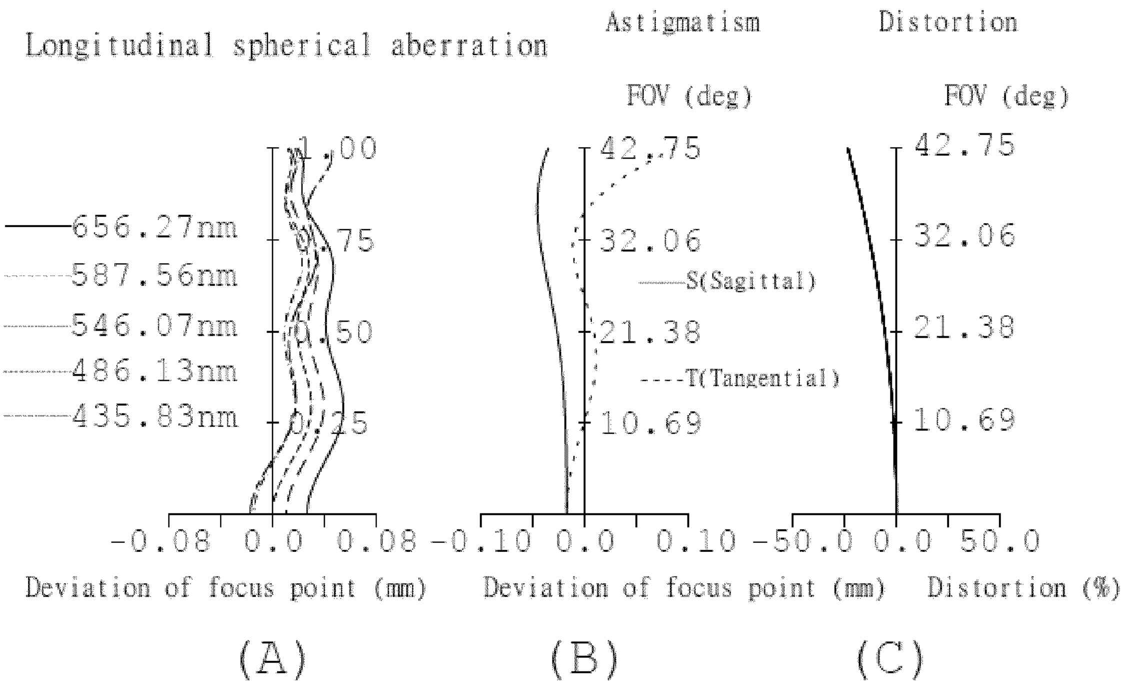
Longitudinal spherical aberration
656.27nm
587.56nm
546.07nm
486.13nm
435.83nm
1.00
0.75
0.50
0.25
-0.08
0.0
0.08
Deviation of focus point (mm)
(A)
Astigmatism
FOV (deg)
42.75
32.06
21.38
10.69
S(Sagittal)
T(Tangential)
-0.10
0.0
0.10
Deviation of focus point (mm)
(B)
Distortion
FOV (deg)
42.75
32.06
21.38
10.69
-50.0
0.0
50.0
Distortion (%)
(C)

FIG. 6

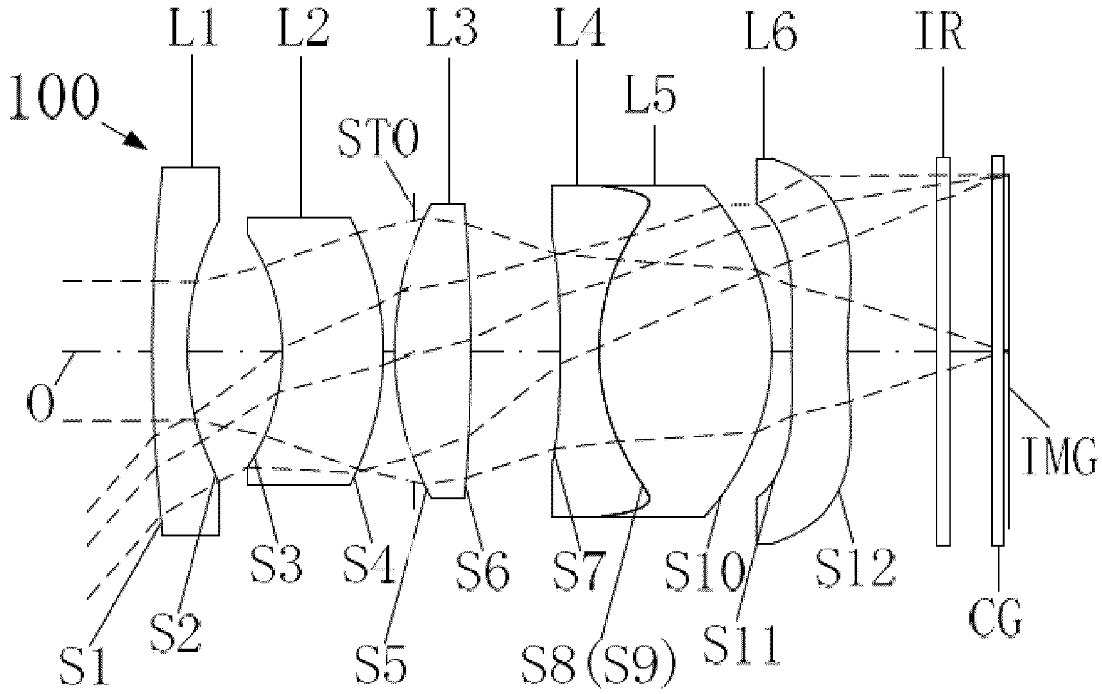
100
L1
L2
STO
L3
L4
L5
L6
IR
O
IMG
S1
S2
S3
S4
S5
S6
S7
S8(S9)
S10
S11
S12
CG

FIG. 7

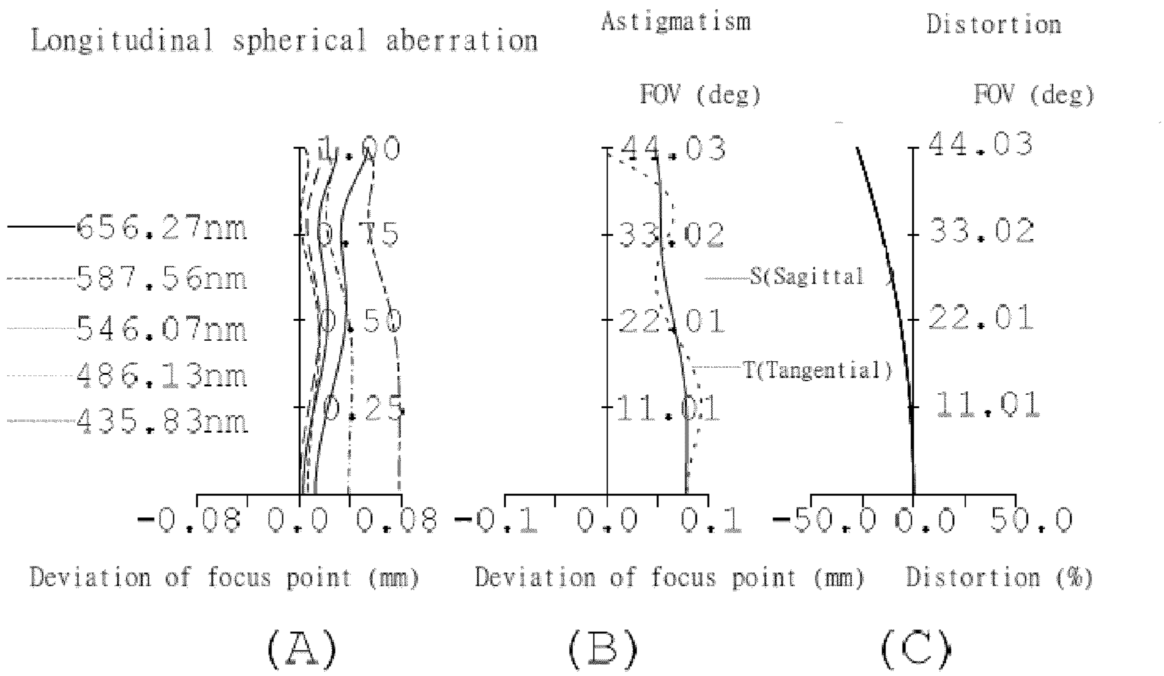
Longitudinal spherical aberration
Astigmatism
Distortion
FOV (deg)
FOV (deg)
656.27nm
587.56nm
546.07nm
486.13nm
435.83nm
1.00
0.75
0.50
0.25
44.03
33.02
22.01
11.01
S(Sagittal
T(Tangential)
44.03
33.02
22.01
11.01
-0.08 0.0 0.08
-0.1 0.0 0.1
-50.0 0.0 50.0
Deviation of focus point (mm)
Deviation of focus point (mm)
Distortion (%)
(A)
(B)
(C)

FIG. 8

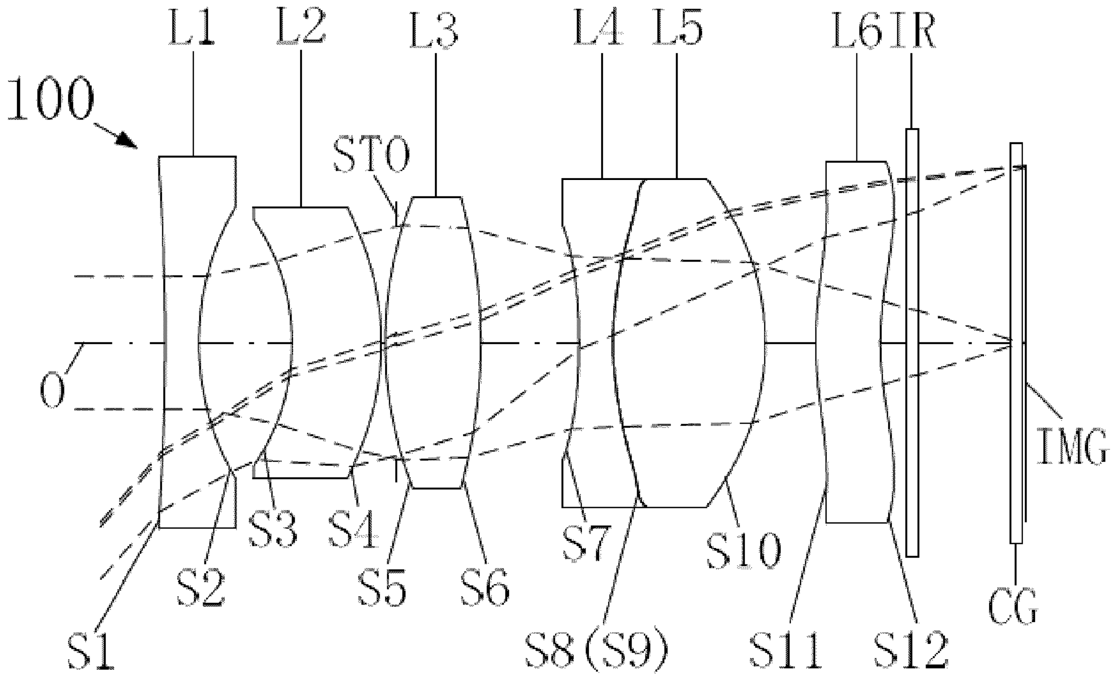
L1
L2
L3
L4
L5
L6
IR
100
ST0
O
IMG
S1
S2
S3
S4
S5
S6
S7
S8(S9)
S10
S11
S12
CG

FIG. 9

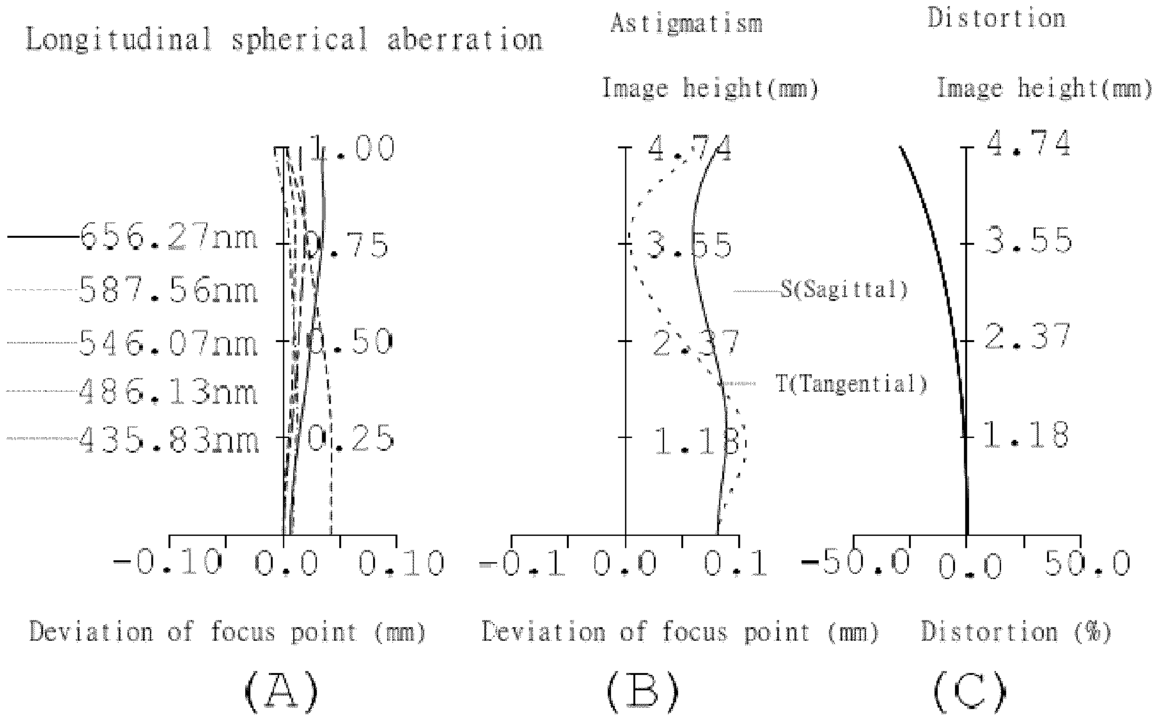
Longitudinal spherical aberration
656.27nm
587.56nm
546.07nm
486.13nm
435.83nm
1.00
0.75
0.50
0.25
-0.10
0.0
0.10
Deviation of focus point (mm)
(A)
Astigmatism
Image height(mm)
4.74
3.55
2.37
1.18
S(Sagittal)
T(Tangential)
-0.1
0.0
0.1
Deviation of focus point (mm)
(B)
Distortion
Image height(mm)
4.74
3.55
2.37
1.18
-50.0
0.0
50.0
Distortion (%)
(C)

FIG. 10

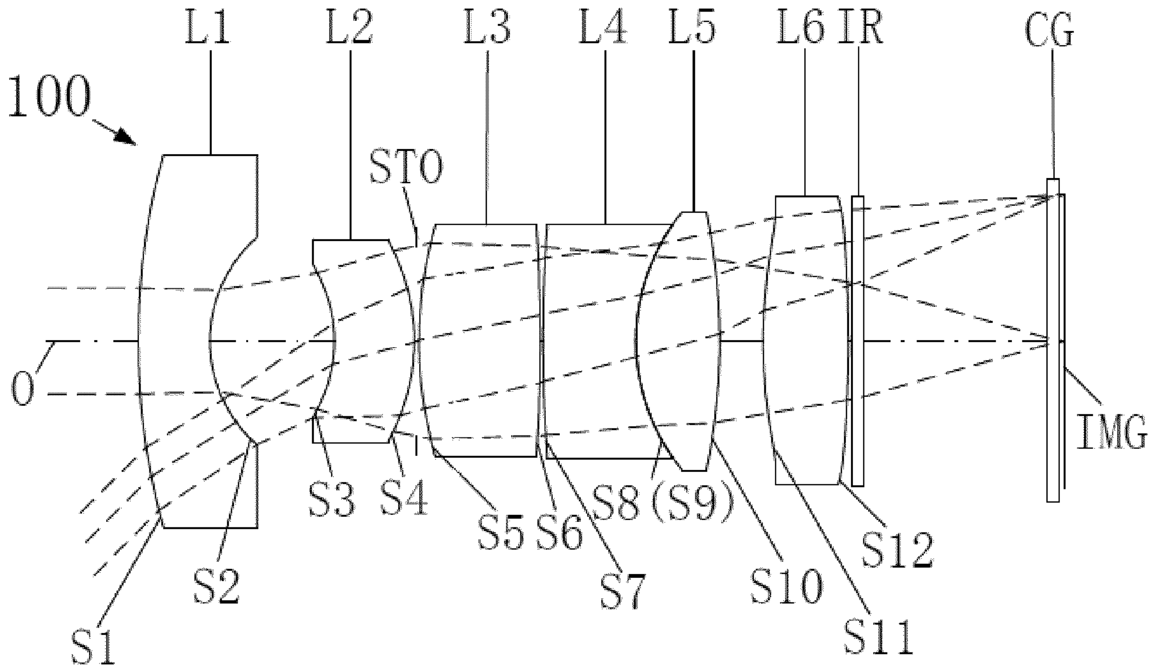
L1
L2
L3
L4
L5
L6
IR
CG
100
STO
0
IMG
S1
S2
S3
S4
S5
S6
S7
S8 (S9)
S10
S11
S12

FIG. 11

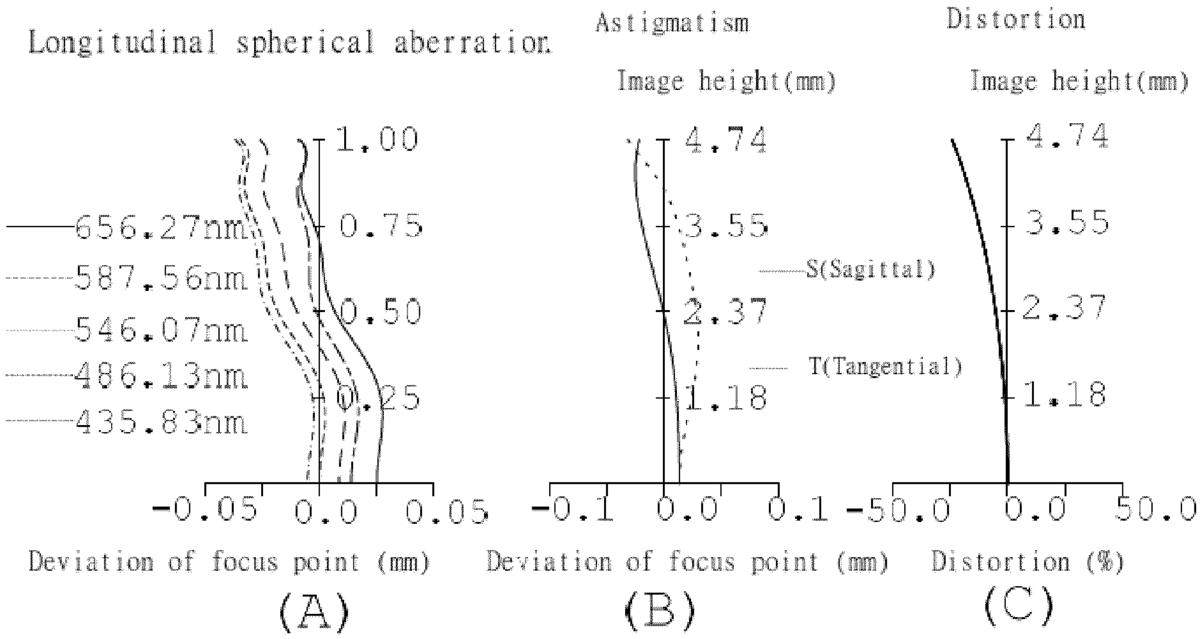
Longitudinal spherical aberration
Astigmatism
Image height(mm)
Distortion
Image height(mm)
1.00
0.75
0.50
0.25
656.27nm
587.56nm
546.07nm
486.13nm
435.83nm
4.74
3.55
2.37
1.18
S(Sagittal)
T(Tangential)
-0.05
0.0
0.05
-0.1
0.0
0.1
-50.0
0.0
50.0
Deviation of focus point (mm)
Deviation of focus point (mm)
Distortion (%)
(A)
(B)
(C)

FIG. 12

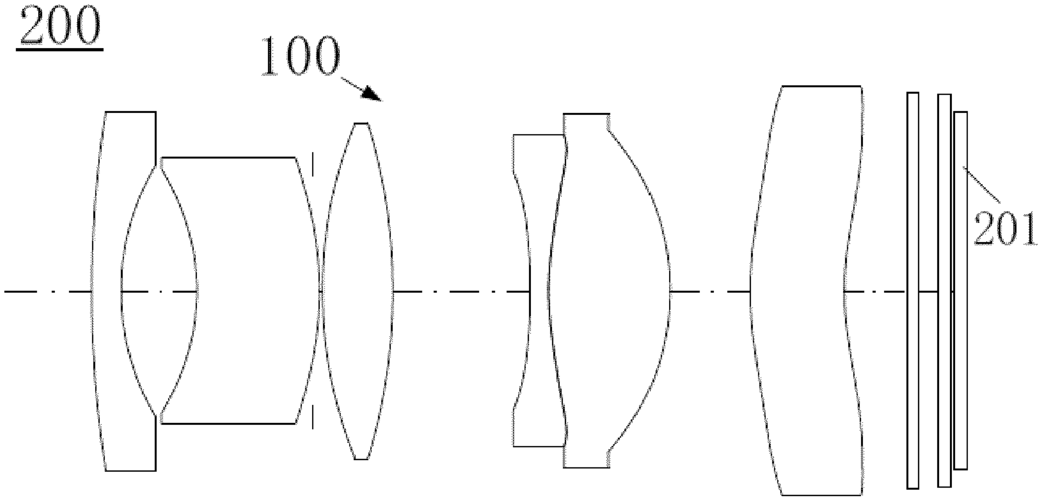


FIG. 13

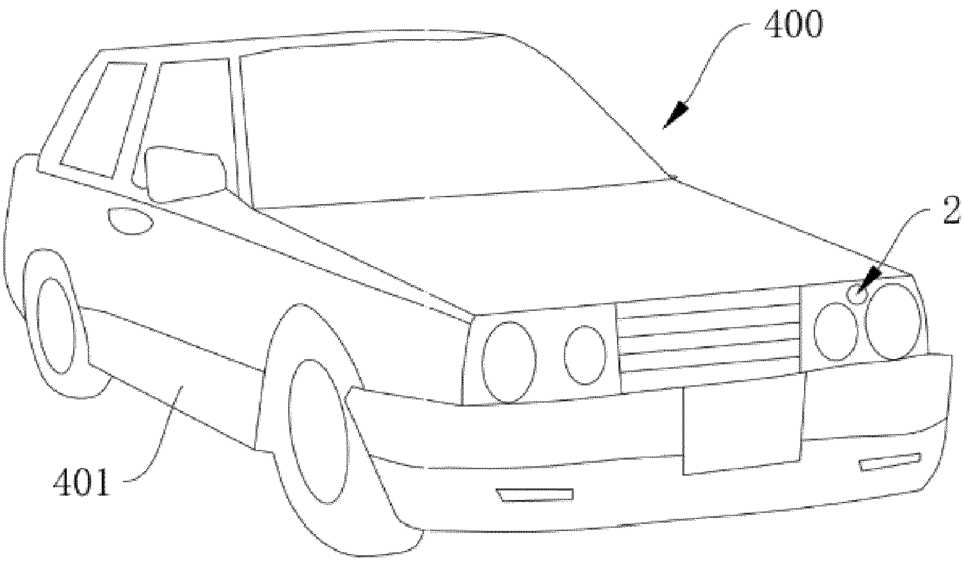


FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021221207 A1
- US 2021026109 A1
- US 9753249 B2